# EUROPEAN PATENT SPECIFICATION

(11) **EP 1 314 283 B1**
(45) Date of publication and mention of the grant of the patent: **16.06.2010**
(21) Application number: 01964788.2
(22) Date of filing: 23.08.2001
(51) Int. Cl.: H04W 8/24, H04W 88/06, H04W 48/18

(54) **SYSTEM AND METHOD FOR REDIRECTING DATA TO A WIRELESS DEVICE OVER A PLURALITY OF COMMUNICATION PATHS**
SYSTEM UND VERFAHREN ZUM WEITERLEITEN VON DATEN ZU EINEM DRAHTLOSEN GERÄT ÜBER MEHRERE KOMMUNIKATIONSPFADE
SYSTEME ET PROCEDE POUR REDIRIGER DES DONNEES VERS UN DISPOSITIF SANS FIL SUR UNE PLURALITE DE VOIES DE COMMUNICATION

(30) Priority: 25.08.2000 US 227947 P; 13.02.2001 US 782380
(43) Date of publication of application: 28.05.2003
(73) Proprietor: Research In Motion Limited, Waterloo, Ontario N2L 3W8 (CA)
(72) Inventor: MOUSSEAU, Gary P., Waterloo, Ontario N2L 6M5 (CA); EDMONSON, Peter, J., Hamilton, Ontario L9B 1A9 (CA); LAZARIDIS, Mihal, Waterloo, Ontario N2T 1K1 (CA)
(74) Representative: Moore, Barry
(86) International application number: PCT/CA2001/001206
(87) International publication number: WO 2002/017564

(56) References cited:
- EP-A- 0 753 979
- EP-A- 0 918 417
- WO-A-99/45684
- WO-A-99/63709
- US-A- 5 210 785
- JOYCE PUTSCHER: "Bluetooth: The Virtual Cord Revolution" CAHNERS IN-STAT GROUP, [Online] January 2000 (2000-01), pages 1-3, XP002215851 Retrieved from the Internet: <URL:http://www.instat.com/insights/consum er/2000/bluetooth12400.htm> [retrieved on 2002-10-08]

## Description

### CROSS REFERENCE TO RELATED APPLICATIONS

This application is a continuation-in-part of United States Patent Application S/N 09/782,380, filed on February 13, 2001, which is a continuation of United States Patent No. 6,219,694, entitled "System and Method for Pushing Information from a Host System to a Mobile Data Communication Device," which was filed May 29, 1998. This application also claims priority from United States Provisional Application S/N 60/227,947, filed on August 25, 2000.

### BACKGROUND

### 1. Field of the Invention

The present invention is directed toward the field of data communications using a mobile device. More specifically, the invention relates to the art of redirecting data to a mobile device having a wireless interface capable of communicating over a plurality of communication paths.

### 2. Description of the Related Art

Systems and methods for replicating data from a host system, such as a desktop computer system or a network server, to a user's mobile device are known. These systems typically employ "synchronization" schemes in which the user's data is warehoused (or stored) at the host system for an indefinite period of time and then is transmitted in bulk only in response to a user request. In order to replicate the stored data, the user typically places their mobile device in an interface cradle that is electrically connected to the host system, and then executes a command, either at the mobile device or the host system, to begin replication. These known techniques employ a "pull" paradigm that requires the user to take affirmative steps to obtain data from the host system. The only point in time at which the host system and the mobile device are truly "synchronized," is at the moment of replication. Several minutes, or even seconds later, a new data item could arrive at the host system (or the mobile device), but this new data item will only be synchronized at the next instance of the replication command being executed.

Systems for redirecting phone calls, or aggregating phone numbers into one phone number, are also known. These systems require the user to manually reconfigure an aggregating phone switch using a plurality of phone numbers so that calls are routed to a new location. Also known are systems that track the number of rings on a given phone number and re-route the call to another number after a set number of unanswered ring signals. In this type of system, special voice messages are sometimes presented to the user asking them to wait while the call is re-rauted. Oftentimes the caller will hang up in response to such a message rather than waiting for additional ring signals on another phone number.

Another known type of system for communicating data to mobile devices is the original paging based system. This type of system uses a small device on the belt that can display a phone number to call in case of emergencies. These systems were typically offered as third-party services that were remote to a company's facilities, and did not relate to communicating the company's private, secure data to mobile users. Advanced versions of these paging systems can transmit an alphanumeric message or even a simple E-mail message limited to about 170 characters or less. To use these systems, the user must accept a second E-mail address, a second phone number, or a contact number and sometimes a third number called a Personal Identification Number (PIN) to communicate with the paging device. These systems also do not provide robust security and privacy, which is a major concern when transmitting sensitive corporate data outside the corporate network.

US5210785, for example, describes a mobile device having long-range and short-range transceivers and a control unit for selecting long or short range communication. The short-range transceiver is for communication with a cordless telephone base station (fixed unit). Short-range communication is selected when the mobile device is within range of the cordless base station. The control unit of the device detects receiving states of signals at the long and short-range transceivers of the device and selects communication based on said signals.

EP0814623, for example, describes a mobile decision method employed by a mobile device for selecting an optimal wireless data network from multiple wireless data networks. The device is operable to compare RF signal strength measurements from the different networks and selection is based on signal strength.

### SUMMARY

According to the invention there is provided a method in accordance with claim 1. Advantageous features are provided in accordance with dependent claims 2-20.

The invention also provides a system in accordance with claim 21. Advantegeous features are provided in accordance with claims 22-37. Also provided is an application in accordance with claims 38-46.

### BRIEF DESCRIPTION

FIG. 1 is a system diagram showing data items being redirected from a host system operating at a users desktop computer to a mobile device over a plurality of communication paths;
FIG. 2 is a system diagram showing data items being redirected from a host system operating at a network server to a mobile device over a plurality of communication paths;
FIG. 3 is a logical flow chart showing how a shared secret can be securely exchanged in the system shown in FIGs. 1-2;
FIG. 4 is a bottom perspective view of an exemplary mobile device having a first wireless component wearable on the user's belt and a second wireless component for insertion in the user ear;
FIG. 5 is another bottom perspective view of the exemplary mobile device shown in FIG. 4, in which the second wireless component has been removed from the first wireless component;
FIG. 6 is a schematic of the second wireless component of the exemplary mobile device shown in FIG. 4;
FIG. 7 is an electrical block diagram of the exemplary mobile device shown in FIGs. 4-6;
FIG. 8 depicts a first user of a mobile device such as shown in FIGs. 4-7 communicating via a first communication path comprising a short range wireless link, and a second user having a mobile device such as shown in FIGs. 4-7 communicating via a second communication path comprising a long range wireless link;
FIG. 9 expands upon FIG. 8, and shows the users moving throughout an office environment and into an environment beyond the office;
FIG. 10 also expands upon FIG. 8, and shows the users moving through a first office environment and into a second, related office environment at a different physical location from the first office environment;
FIG. 11 is a logical flow diagram depicting a series of exemplary steps executed by a redirector application operating at a host system for determining which communication path should be used for routing data items to a particular mobile device; and
FIG. 12 is a logical flow diagram depicting a series of exemplary steps executed by a redirector application operating at a host system for determining which communication path should be used for routing data items to a particular mobile device within a corporate environment having a plurality of office locations.

### DETAILED DESCRIPTION

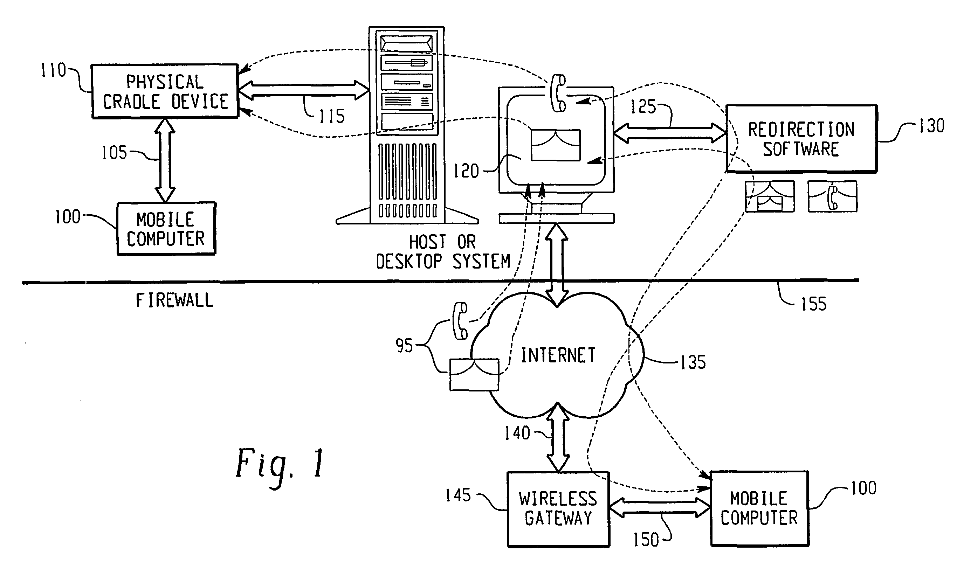

Referring now to the drawing figures, FIG. 1 is a system diagram showing data items 95 being redirected from a host system 120 operating at a user's desktop computer to a mobile device 100 over a plurality of communication paths. In addition to the mobile device 100 and the host system 120, the system includes one or more RF-enabled interface cradles 110, a wide area network 135, a redirector application 130, a wireless gateway 145, and a wireless network 150.

FIG. 1 shows two possible communication paths for redirecting the data items to the mobile device 100. In a first path, the redirector application 130 is in communication with the mobile device 100 via a long-range wireless network comprising a wide area network 135, a wireless gateway 145, and a wireless network 150. The long-range wireless communications path could be, for example, the Mobitex Radio Network ("Mobitex"), the DataTAC Radio Network ("DataTAC"), the Code Division Multiple Access (CDMA) network, the Groupe Special Mobile or the Global System for Mobile Communications (GSM) and the General Packet Radio Service (GPRS), or the future third-generation (3G) networks like UMTS, EDGE and W-CDMA.

In a second path, the redirector application 130 is in communication with the mobile device 100 via a short-range wireless network comprising interface 115, and interface cradle 110, which is preferably equipped with a short-range wireless RF transceiver. The short-range wireless interface could be, for example, a Bluetooth interface, or any other type of short-range RF interface. The interface cradle 110 can communicate with the mobile device in two ways. First, by physically and electrically connecting the mobile device 100 to the cradle 110. Second, by communicating short-range wireless signals between the wireless RF transceiver of the cradle 110 and a short-range wireless transceiver in the mobile device 100.

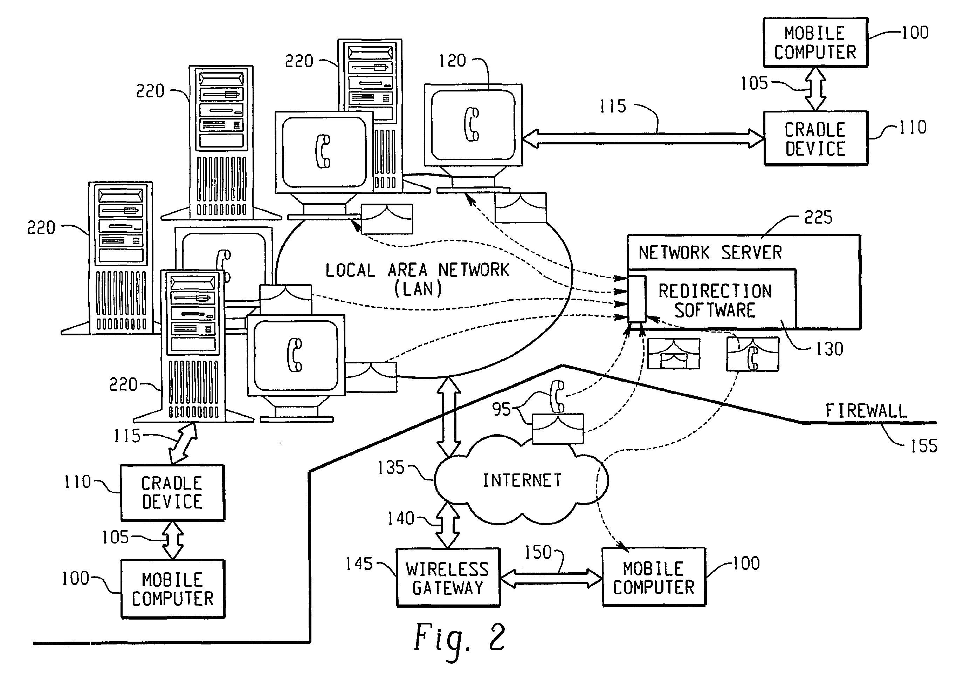

FIG. 2 is a system diagram showing data items 95 being redirected from a host system 120 operating at a network server 225 to a plurality of mobile devices 100 over a plurality of communication paths. The host system could be a desktop system, a network server, and Internet Service Provider (ISP), a phone switch, a mail router or storage area, an information database, or some other type of primary data center. The host system 120/225 operates as a storage/redirection facility for holding the mobile user's data, and for redirecting the data to the user's mobile device. The host system 120/225 is preferably located behind a corporate firewall 155, which acts as a privacy barrier for protecting sensitive corporate information. The host system can also be directly coupled to the redirector software 130 so that they act as one program. In this embodiment the host system 120 is said to be "wirelessly enabled" by the redirector software 130. This co-operative relationship between the redirection software and the messaging system can be used to wirelessly enable any messaging system. Commonly used messaging systems include Microsoft's^{™} 'Exchange' e-mail system, IBM's™ Lotus Notes message system and the Internet standard IMAP4 message system.

FIG. 2 is similar to FIG. 1, except that the network server implementation enables a single redirector application 130 to service a plurality of users by receiving data items from a plurality of sources and then by redirecting those data items to a plurality of users. Although a single redirector application 130 is shown in FIGs. 1 and 2, the system can be expanded for use with multiple redirector applications 130.

The redirector application 130 preferably operates on the host system 120, although it could operate on some other system and be in communication with the host system 120 through a network connection. It receives, processes, stores, filters, and redirects data items from the host system 120 to the mobile device 100. The redirector 130 also functions to determine the best communication path over which the data items should be redirected. This determination is based on information collected and stored at the redirector 130 (or accessible by the redirector application) that identifies the approximate physical location of the mobile device user. The redirection program 130 is an event-driven program, operating at the host system 120, which, upon sensing a particular user-defined event has occurred, redirects user-selected data items from the host system to the user's mobile device 100. The redirector program 130 also interfaces to components that can detect the physical location of the user and track the least congested path, shortest path or best propagation path to redirect the user's information. The information can comprise data messages, phone items, video items or any digital or analog information that might be delivered to a user's host system 120. For matter of clarity the term data items will refer to all forms of information to be sent to the user including data, voice, video and other digital information. For a matter of brevity, the term "host system" includes but is not limited to either a standalone desktop computer connected to a LAN, a fixed facility like an ISP's service offering, or a networked computer terminal connected to a server and/or an Internet appliance connected to the Internet or Intranet.

For example, in the network implementation shown in FIG. 2, as a mobile user moves within physical proximity to one of the RF-enabled interface cradles 110, information is sent to the redirector application 130 identifying the mobile device 100 and the network address of the interface cradle 110. Using this information, the redirector application 130 will redirect any incoming or altered data items over the LAN (or other network) to the interface cradle 110 and then to the mobile device via a short-range RF communication path. Once the mobile user moves away from the interface cradle 110, additional information is sent to the redirector application 130 indicating that the user is no longer in physical proximity to the particular cradle 110. The redirector 130 will then redirect any data items to the mobile device 100 over the long-range RF communication path 135, 145, 150 until such time as the mobile user moves within close physical proximity to another interface cradle 110.

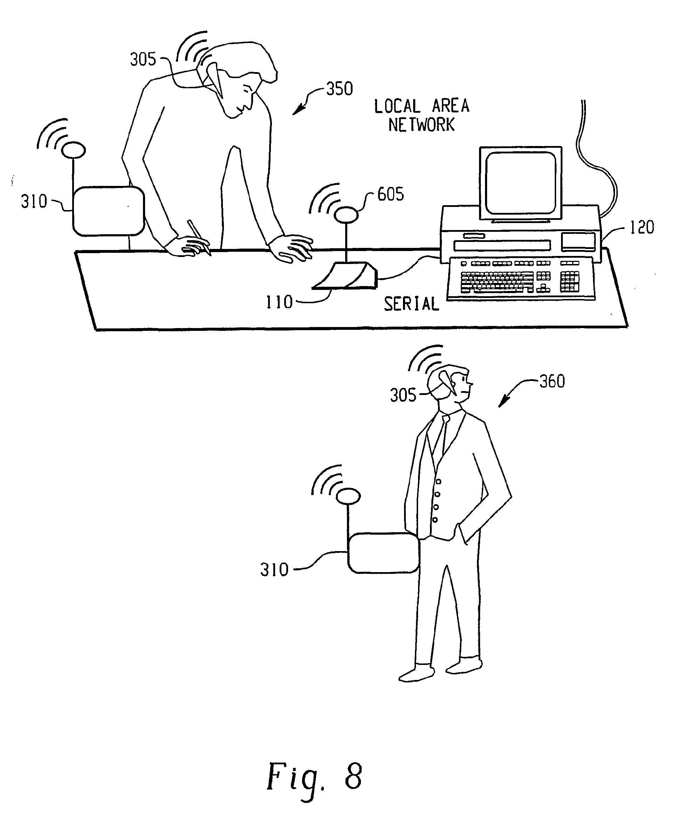

A mobile user communicating with this system may have multiple offices in which the user may work from, including a home-based office, a plurality of cubical offices in a plurality of office buildings, a workstation at a remote office space, etc. As the mobile user moves into and out of his home office and the other offices, a wireless communication path between the mobile device 100 and the host system 120 is either established or broken. As the mobile user breaks contact with his home office's physical space (and hence the mobile device 100 breaks contact with an interface cradle 110 at the home office), the redirector program 130 begins to route data, e-mail, voice calls, video calls, etc., and all other direct communications to the mobile device 100 over the long-range wireless network 135, 140, 145. In another embodiment each business office is made up of 'cells' called pico-cells 110 & 605 in this application, shown in detail in figure 8. As the user roams within the office, he is preferably re-connected to whichever short-range pico-cell 100 & 605 is located closest to him. In this manner, voice and data may be routed within the corporate firewall 155 and LAN space wirelessly to whichever office or cell a given user is currently located in. Advantageously, this system provides higher-bandwidth, cost effectiveness, rapid delivery of information redirected from the home office. So as a user walked around, having meetings and mini-conferences, all his phone calls, data messages and e-mail message would also take the shortest path to the user within the company's building. Only if the user left the physical proximity of the companies building, or the coverage within the building is insufficient, would the long-range, wide area wireless network have to be used.

It should be understood that the terms "office" and "office environment," as used herein, may refer to any enclosed or partially enclosed location, and are not limited to places in which business is conducted. The term office environment implies a relationship between the user and the host system 120. In most businesses today this relationship is defined by the installation of a firewall 155 around the corporate LAN environment that acts as a privacy barrier for information of all kinds. Advantageously, the invention supports this secure relationship created by the company's firewall 155 and allows information to be routed security to the user without comprising corporate security. The firewall helps to define the relationship between an individual and his corporate data.

Alternatively, the redirector application 130 may be provided with real-time information regarding the quality of the various communication paths to the mobile user, and can use this quality information to determine the best communication path for redirecting the data items. For example, even though the user may have come within close physical proximity to one of the interface cradles 110, the link between the redirector application 130 and the interface cradle 110 may have degraded in quality because of network congestion. In this situation, the redirector 130 would revert to the long-range wireless network 135, 145, 150 in order to redirect information to the mobile device 100. In another example situation, the mobile user is within close physical proximity of two RF-enabled interface cradles 110, but one is less congested then the other (i.e., less mobile users are communicating with one of the cradles than the other). In this situation, the redirector application 130 may determine that the best communication path to the mobile user is through the least congested interface cradle, and will then redirect the data accordingly.

Using the redirector program, the user can select certain data items for redirection, such as phone calls, e-mail messages, calendar events, meeting notifications, address entries, journal entries, personal reminders, etc. As new data item types are added to the system, the user may add these new data item types to a personal preference list maintained by the redirector 130. The user can review a list of items that could be redirected to his or her mobile device, and select those data item types that the user desires for redirection. Having selected the data items for redirection, the user can then configure one or more event triggers to be sensed by the redirector program and to initiate redirection of the user data items. These user-defined trigger points (or event triggers) may include external events, internal events and networked events.

Examples of external events include: receiving a message from the user's mobile data communication device to begin redirection; receiving a similar message from some external computer; sensing that the user is no longer in the vicinity of the desktop computer via the short-range RF link to the cradle; or any other event that is external to the host system. Internal events could be a calendar alarm, screen saver activation, keyboard timeout, programmable timer, or any other user-defined event that is internal to the desktop computer. Networked events are user-defined messages that are transmitted to the host system from another computer coupled to the host system via a network to initiate redirection.

An exemplary redirector application for use with this system is described in more detail in United States Patent No. 6,219,694, entitled "System and Method for Pushing Information from a Host System to a Mobile Data Communication Device," which is commonly assigned with the present application.

The systems shown in FIGs. 1-2 preferably operate as follows. As data items 95 reach the desktop 120 (or network server 225) they are processed by the redirection software 130. The redirection software 130 is preferably operating either within the desktop system 120 or as part of the network server 225. The redirector software 130 determines the best communication path for reaching a particular user associated with an incoming data item and then routes the data item 95 over the best communication path. This determination step can take many forms. In a preferred form, the redirector software 130 maintains a database entry for each mobile device 100 indicating whether the mobile device 100 is currently in the vicinity of an interface cradle 110 having an RF wireless interface, and the network address of that interface cradle 110. If a particular mobile device is within the vicinity of such an interface cradle 110, then the redirector 130 processes and transmits the data item 95 over the LAN (in the example of FIG. 2) or directly to the cradle 110 (in the example of FIG. 1), which then transmits the data item 95 over its short-range RF link to the mobile device 100. If, however, the mobile device 100 is not within the vicinity of any such interface cradle 110, then the redirector application 130 routes the data item over the long-range wireless network 135, 145, 150 to the mobile device 100.

Preferably, when a user of a mobile device 100 comes within the physical proximity of an interface cradle 110 having a short-range RF link, the mobile device 100 transmits a contact message to the cradle 110. This message contact is then processed and contact information is provided to the redirector application 130 indicating that the mobile device 100 is now within the physical proximity of the particular cradle 110. Then, when the mobile device 100 leaves the physical proximity of the particular cradle 100, the cradle 100 senses the lack of communication from the mobile device 100, and notifies the redirector application 130 that the mobile device 100 is no longer in the proximity of the cradle 110. In this manner, the redirector application 130 can determine the approximate physical location of the mobile device 100.

Other exemplary methods of determining the approximate physical location of the mobile device 100 (and hence the user) include: (1) detecting the physical presence of the mobile device 100 in the physical serial cradle 110, (2) detecting the activation of a screen saver program associated with the desktop host system, (3) using heat sensors to determine whether the user has left the area of the host system, (4) using a visual image detector to determine whether the user is not present, or (5) receiving a direct command from the user to redirect information in a certain way. In each of these cases, the redirector application 130 is provided with information that it uses to determine the best communication path for redirecting data to the mobile device 100.

In the case of the network server 225 in FIG. 2, there is an additional step of determining which network workstation 220 received the data item 95. This additional step is necessary in order to associate the data item 95 to a particular mobile device 100. This can be done through special addressing, such as the 'To Address' in an E-mail message, or it can be done using a phone extension for an incoming phone call.

In one embodiment, described in more detail below, the mobile device 100 can be configured with a plurality of wirelessly-enabled components, including (1) a first component 310 for data storage, retrieval, and long-range RF communication, and (2) a second component 305 for audio input/output and short-range RF communication. Alternatively, a short-range RF transceiver may be included in both the first component 310 and the second component 305. The second component 305 is preferably a detachable ear-piece, which is placed in the ear of the user. This second component 305 may communicate directly with the interface cradle 110 via the short-range RF communication link, or it may communicate with the first component 310, which then communicates with the interface cradle 110. The first component 310 is preferably positioned in a device holster attached to the user's belt.

Using this multi-transceiver mobile device 100, if the user is in the same room (or within close physical proximity) as one of the RF-enabled interface cradles 110, then the data items 95 are redirected from the interface cradle 110 either directly to the ear-piece component 305 or to the first component 310. For example, the system may be configured such that voice information, like voice messages or real-time voice calls, are redirected directly to the ear-piece component 305, while data information, such as E-mails, files, or other types of digital data, are redirected to the belt-worn first component 310. In this manner, information is redirected directly to the user with no manual intervention with the desktop computer system 120.

As described above, the host system 120/225 is preferably located behind a corporate firewall system that protects a company's sensitive corporate data. The system described herein operates in conjunction with the company's existing security mechanisms (including the firewall system) by extending an already secure desktop/corporate environment to cover wireless mobile devices. This security takes places through the exchange of a shared secret (such as a public key for encrypted/decrypting data) between the mobile device 100 and the host system 120/225, preferably through the RF-enabled interface cradle 110. This operation effectively extends the corporate firewall around the mobile device 100, thereby creating a virtual private wireless network (VPWN).

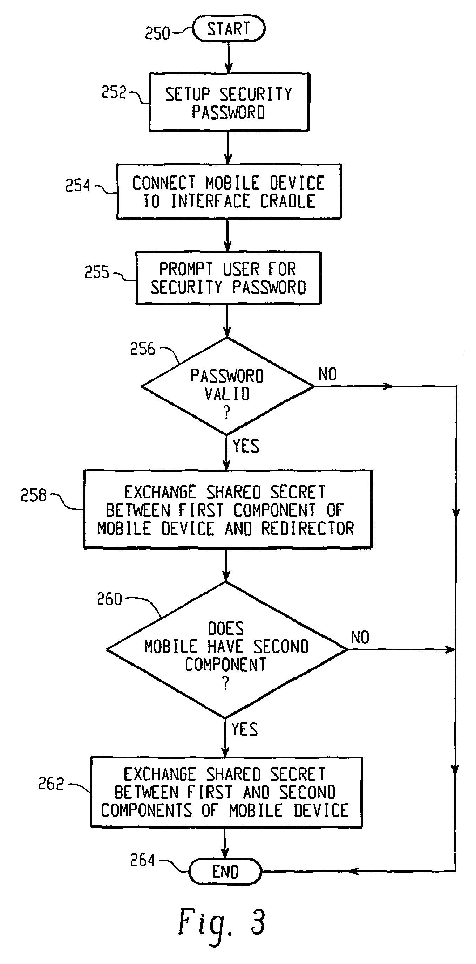

FIG. 3 is a logical flow chart showing how a shared secret can be securely exchanged between a mobile device 100 and a redirector application 130 in the system shown in FIGs. 1-2. The method begins at 250. In step 252, the user configures a security password, which is stored in conjunction with the redirector application 130. When the user is ready to exchange the shared secret, the user places the mobile device 100 in electrical and physical contact 254 with the interface cradle 110. The user is then prompted 255 to enter a security password into the mobile device (or into a desktop system coupled to the interface cradle 110). If the security password is not valid, then the method ends at 264. If, however, the security password is valid, then at step 258 the shared secret is exchanged and stored at the redirector application 130 and within the mobile device 100. This shared secret can then be used by the redirector 130 to encrypt data prior to redirection, and also by the mobile device 100 to decrypt the encrypted data. Similarly, the shared secret can be used to encrypt reply information at the mobile device 100 and to decrypt the encrypted reply information at the redirector 130. At step 260, the method then determines whether the particular mobile device 100 has two wireless components, such as the device mentioned above and described in more detail below. If the mobile device 100 does not have two wireless components, then the method ends 264. If, however, the mobile device 100 includes at least two wireless components, then at step 262 the same (or some other) shared secret is then exchanged between the first component 310 of the mobile device 100 and the second component 305 of the mobile device 100. In this manner, a secure, end-to-end connection can be established between the redirector application 130 and the mobile device 100, including a second wireless component 305 of the mobile device 100.

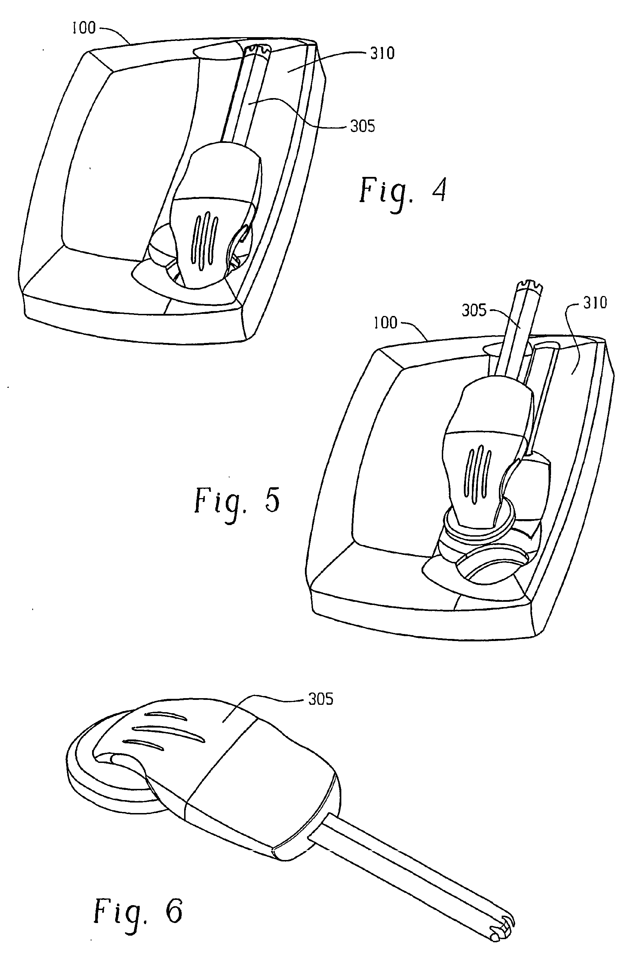

FIG. 4 is a bottom perspective view of an exemplary mobile device 100 having a first wireless component 310 wearable on the user's belt and a second wireless component 305 for insertion in the user's ear. FIG. 5 is another bottom perspective view of the exemplary mobile device 100 shown in FIG. 4, in which the second wireless component 305 has been removed from the first wireless component 310. FIG. 6 provides a closer image of how the ear-piece or ear-bud 305 can be removed from the belt-worn component 310. This clip-in component 305 can be removed easily and placed into the user's ear. Once removed, the RF transceiver of the ear-piece 305 is preferably automatically activated (by sensing that it is no longer in electrical contact with the first component 310), enabling voice calls to be directly (or indirectly) received by this component 305. When the ear-piece 305 is snapped back into its compartment within the belt-worn component 310, the RF transceiver in the ear-piece 305 is preferably disabled. This automatic shutdown of the ear-piece transceiver provides a method for holding all calls and sending them directly to voice mail. When the first component 310 senses that the ear-piece 305 is in the compartment, it will respond to any incoming voice calls 95 by sending a message back to the redirector 120 that indicates the call cannot be accepted and that it should be routed into the user's voice mail system.

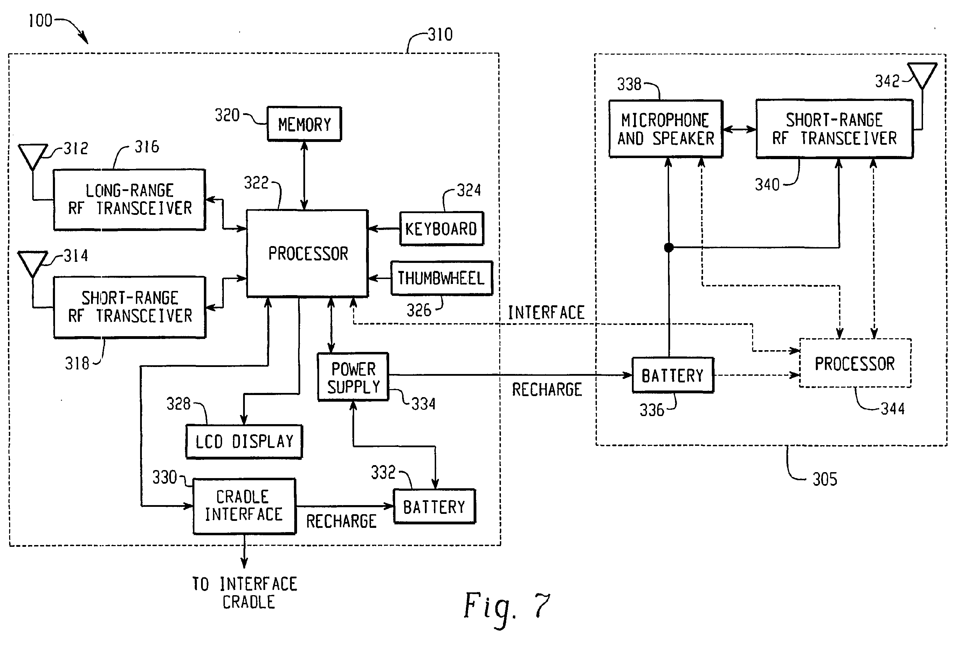

FIG. 7 is an electrical block diagram of the exemplary mobile device 100 shown in FIGs. 4-6. FIGs. 4-7 describe an exemplary type of mobile device 100 that may be used with the system described herein. Another type of mobile device that could be modified for use with this system is described in co-pending United States Patent Applications S/N 09/106,585, 09/344,432, 09/543,231, 09/634,774 and 09/663,972. These applications are co-owned with the present application. The mobile device described in these applications includes only a single wireless RF component for communicating over a single communication path to a long-range wireless network. The device shown in FIG. 4-7 is similar to these devices in that it can communicate over a long-range wireless network, but also includes an RF interface for communicating over a short-range wireless network. This short-range wireless interface is preferably implemented in both the first and second components 310, 305, so that the first component 310 can communicate with the second component 305 over the short-range interface, and also both the first and second components 305, 310 can communicate with the one or more RF-enabled interface cradles 110.

The mobile device 100 shown in FIGs. 4-7 preferably comprises a first RF-enabled component 310 and a second RF-enabled component 305. The first RF-enabled component 310 preferably includes a pair of antennas 312, 314 (although a single antenna structure could be used), a processor 322, a memory 320, an LCD display 328, at least one rechargeable battery 332, a long-range RF transceiver 316, one or more short-range RF transceivers 318, a power supply and recharging circuit 334, a cradle interface circuit 330, and one or more input devices, including, preferably, a keyboard 324 such as described in the above mentioned co-pending applications and a thumbwheel 326. The first component 310 may also include a pressure-sensitive writing tablet.

The input devices 324, 326 on the first component 310 are used to respond to and generate messages, such as E-mail messages. The first component 310 preferably interfaces with a belt-worn holster for receiving the first component 310 and securing it to a user's belt. The long-range RF transceiver 316 is used to send and receive information from the long-range wireless network 135, 145, 150, and the one or more short-range RF transceivers 318 are used to send and receive information from either the RF-enabled interface cradle 110 or the second component 305.

The power supply circuit 334 receives power from the battery 332 and provides conditioned power to the remainder of the circuitry in the first component 310. When the first component 310 is placed in the interface cradle 110, the first component can communicate information with the interface cradle 110, and hence the redirector application 120, via the cradle interface circuit 330. The cradle interface circuit 330 also receives recharging power from the interface cradle 110 for recharging the battery 332.

The second component 305 is preferably an RF-enabled ear-piece that may be connected to (both mechanically and electrically) the first component 310. The second component 305 preferably includes a microphone and a speaker 338, a short-range wireless transceiver 340, an antenna 342, and a rechargeable battery 336. The second component 305 may also include an integral processor 344. When the second component 305 is placed into the first component 310, a shared secret can be exchanged between the two wireless components of the mobile device 100 so that any communications between the first and second components 305/310 may be encrypted. Also, the rechargeable battery 336 of the second component 305 may be recharged by the battery 334 of the first component 310 through power supply recharging circuitry 334 when the two components are in electrical contact.

In other embodiments, the mobile device 100 may include a camera component for displaying or sending video images to the mobile user, or could include sensory circuits for monitoring the mobile user's vital information such as pulse and blood pressure. In these embodiments a nurse or doctor in a hospital floor could wear the first component, while the second might be in a patient's room monitoring some vital statistics. The short-range communication in this example might reach several hundred feet and several second components might be communicating to a single first component. This information could then be relayed on from the first component worn by the nurse or doctor to a central nursing station for all nurses on duty to see and monitor.

One example of how the mobile device 100 shown in FIGs. 4-7 can be used with the system described herein is as follows. When voice calls arrive to the user's desktop computer 120, the short-range wireless cradle 110 informs the desktop 120 whether it can route the call directly to the user's belt component 310. If the user is within communicable distance of the RF-enabled cradle 110, then the call is routed directly from the desktop computer 120 to the belt component 310 via the short-range wireless communication path, and then from the first component 310 to the ear-piece component 305. Alternatively, the call may be routed directly to the second component 305. If, however, the mobile device 100 (and hence the mobile user) is out of range of the interface cradle 110, or is in poor coverage, or is experiencing congestion problems, then the call is routed from the desktop host system 120 via the long-range wireless network 135, 145, 150 to the user's first component 310 of the mobile device 100. Once the call is received from the long-range network, the first component 310 then routes the call to the user's ear-piece component 305, and the phone call is completed preferably without either party to the call knowing that the re-routing has taken place.

In one embodiment, the ear-piece component 305 and the belt component 310 both include short-range RF transceivers that communicate with the RF-enabled interface cradle 110. Using this embodiment of the mobile device 100, voice calls are routed directly from the interface cradle 110 to the ear-piece component 305, and information data messages are routed from the interface cradle 110 to the belt component 310.

The mobile device 100 may also include a natural language-type voice interface between the ear-piece component 305 and the belt component 310. This interface allows the user to interact with the belt component 310 and issue a series of voice commands, such as: "Directory Services," "Find Name: Gary," "Select Gary M," or "Call Gary." In this series of example commands, the interface, which is preferably a software-based interface operating in the belt component 310, would preferably find several "Garys" and then prompt the user to select a particular "Gary." The voice interface may also allow enable the user to issue calling commands that are spoken into the microphone of the second component 305, such as "accept call," "route call," "refuse call," and "send call to voice-mail."

Using the voice interface, for example, the user may, in an important business meeting, temporarily suspend voice calls, but allow messages from their secretary through in the event of an emergency. Or, the first component 310 could be configured to voice caller ID information on incoming voice calls to the user through the second component 305 so that the user may decide whether to answer the call. The first component may, for example, play a message on the second component 305, such as "you have a call from Gary Mousseau, say Accept to accept the call or anything else to send the call to voice mail." Alternatively, the first component 310 might vibrate to indicate that a voice call is arriving, at which point the user could remove the first component and view a display of the caller's ID. Then, the user could interface with the input device(s) on the first component 310 to accept the call, to send it to voice mail, or to hang-up on the caller. In this manner, the mobile device 100 may operate as a hands-free calling center for receiving and transmitting voice calls, in addition to receiving and transmitting a variety of data types.

FIG. 8 depicts a first user 350 of a mobile device 100 such as shown in FIGs. 4-7 communicating via a first communication path comprising a short-range wireless link, and a second user 360 having a mobile device such as shown in FIGs. 4-7 communicating via a second communication path comprising a long range wireless link. In this figure, the first user 350 is in the vicinity of an RF-enabled interface cradle 110, but the second user 360 is not.

The first user 350 is preferably in her office, and has removed the second component 305 from the first component 310 of the mobile device 100 and placed it 305 in her ear. As voice calls or data messages arrive into the user's desktop system 120, the voice calls are preferably routed directly to the second component 305, while the data messages are transmitted to the first component 310. Alternatively, the voice calls may be routed to the first component 310 from the RF interface of the interface cradle 110, and the first component 310 would then transmit the voice calls up to the second component 305. The user's desktop system 120 may be operating as the redirector 130, or may be operating over a LAN in conjunction with a network-based redirector 225/130. The interface cradle 110 also has an antenna 605 for communicating with both the ear-piece component 305 and the first component 310.

The user 350 may configure the redirector 130 such that if the first component 310 is placed in the interface cradle 110, then the redirector 130 stops redirecting data to the first component 310. In this example, the act of placing the mobile device 100 in the cradle 110 operates as a trigger to stop and start redirection. In a similar embodiment, placing the ear-piece 305 into the first component 310 holder turns off redirection of voice calls to the user's ear from the first component 310. In this later example, if the ear-piece 305 is in the first component 310, which is in turn positioned in the interface cradle 110, then the user's 'traditional' phone or computer may be configured to ring when a voice call arrives.

In the bottom portion of FIG. 8, the second user 360 has moved out of the vicinity of any RF-enabled interface cradles 110. At this point, the ear-piece 305 preferably detects that it can no longer establish RF contact with an interface cradle 110, and thus establishes RF contact directly with the first component 310. Similarly, the first component 310 detects that it also cannot establish an RF link to the interface cradle 110, and, therefore, to maintain an RF link for data and voice, the first component 310 turns on its long-range RF transceiver to make contact with a long-range wireless network. As discussed above, when the mobile device 100 breaks contact with the interface cradle 110, contact information is provided to the redirector 130 so that it can determine whether to redirect information over the long-range RF network.

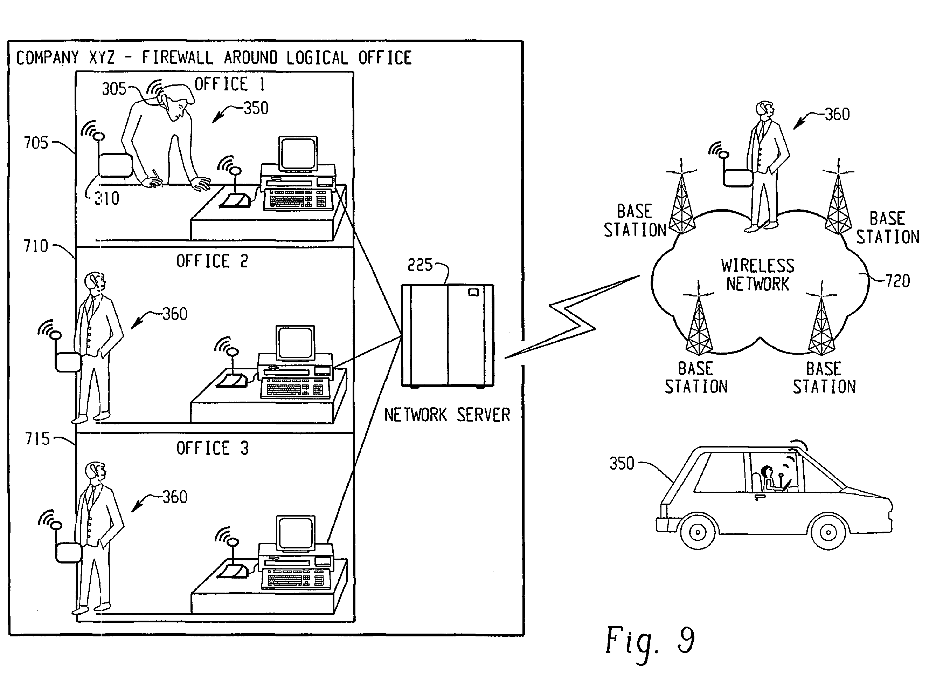

FIG. 9 expands upon FIG. 8, and shows the users 350/360 moving throughout an office environment and into an environment beyond the office. The office shown in FIG. 9 may include a plurality of RF-enabled interface cradles 110 that form a plurality of wireless 'cells,' referred to herein as pico-cells. As the second user 360 roams within the office, he is preferably connected and re-connected to whichever short-range pico-cell is located closest to him (i.e., which RF-enabled interface cradle 110 he is closest to.) As the user connects, disconnects and connects to the plurality of interface cradles 110, his physical presence is detected by virtue of the RF connections, and routing information is then provided from the cradles 110 to the redirector application 130, which is preferably operating at the network server 225. The redirector application 130 then uses this contact information to alter the location to which the user's data items are redirected. Thus, as the user 360 roams from pico-cell to pico-cell, his data items are automatically redirected to wherever he is physically located.

As the redirected data items 95 (voice and data) arrive for the user 360 they are routed to the correct desktop and sent directly through the interface cradle 110 to the user's ear-piece 305 or belt-worn component 310. Given the data-carrying capacity of current corporate LANs, i.e., 10 megabit or 100 megabit speeds, it is also possible to multiplex more than one voice call, or data exchange with a mobile device through the same interface cradle 110. Thus, more than one user may be served by each of the plurality of interface cradles 110. As the user leaves the office environment, and thus the range of the office pico-cell network, this is detected by the system and the redirector then routes any incoming data items over the long-range wireless network to the mobile device 100.

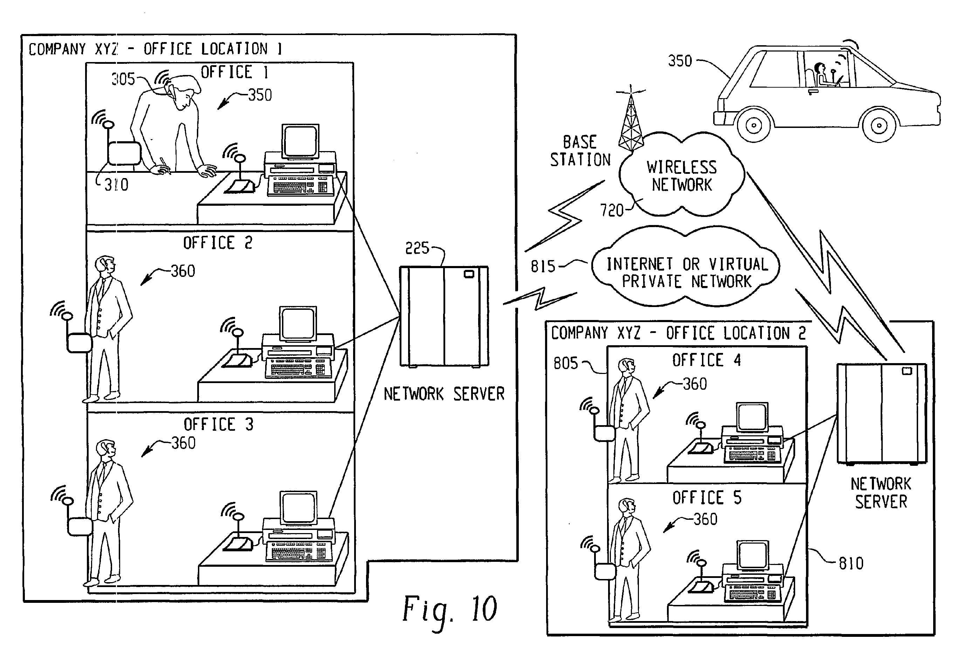

In this manner, voice and data may be routed behind the corporate firewall and LAN space wirelessly to the current location of the mobile user. As the user moves around the office space, all his phone calls, data messages and E-mail messages would be routed to the mobile device 100 via the network of pico-cells. Only if the user left the physical proximity of the office space, or if the coverage within the office space is insufficient, would the data items then be redirected to the mobile device 100 over the long-range wireless network. FIG. 10 also expands upon FIG. 8, and shows the users 350/360 moving through a first office environment and into a second, related office environment at a different physical location from the first office environment. In this scenario, there may be only a short period of time where the user's mobile device 100 may need to use the long-range network 720, such as when the user is traveling outside the corporate offices.

As the user 360 moves from the first office location to the second office location and enters Office 4 805 and Office 5 810, the user's mobile device 100 is once again in communication with one of the plurality of RF-enabled interface cradles 110 acting as a pico-cell. In this instance, the user's position information is provided to a network server serving the second office location, and is then communicated via a virtual private network (or VPN) 815 over a wide area network to the redirector application operating at the first office location. Thus, the redirector knows that the user is at a particular location in the second office and may redirect the user's voice and data information accordingly.

The VPN 815 may be created with a high-speed point-to-point connection over ISDN, Frame Relay or T1 circuits. Alternatively, many companies create VPNs 815 over the Internet with special security routers on both ends of the connection. The multi-office pico-cell solution shown in FIG. 10 is advantageous because it increases the speed at which data can be redirected, and reduces the price for re-routing data items 95 to the user. Generally, long-range wireless data networks may expensive to use. Thus, by redirecting data over the expensive long-range network only when absolutely necessary, the system described herein provides a less expensive wireless redirection solution.

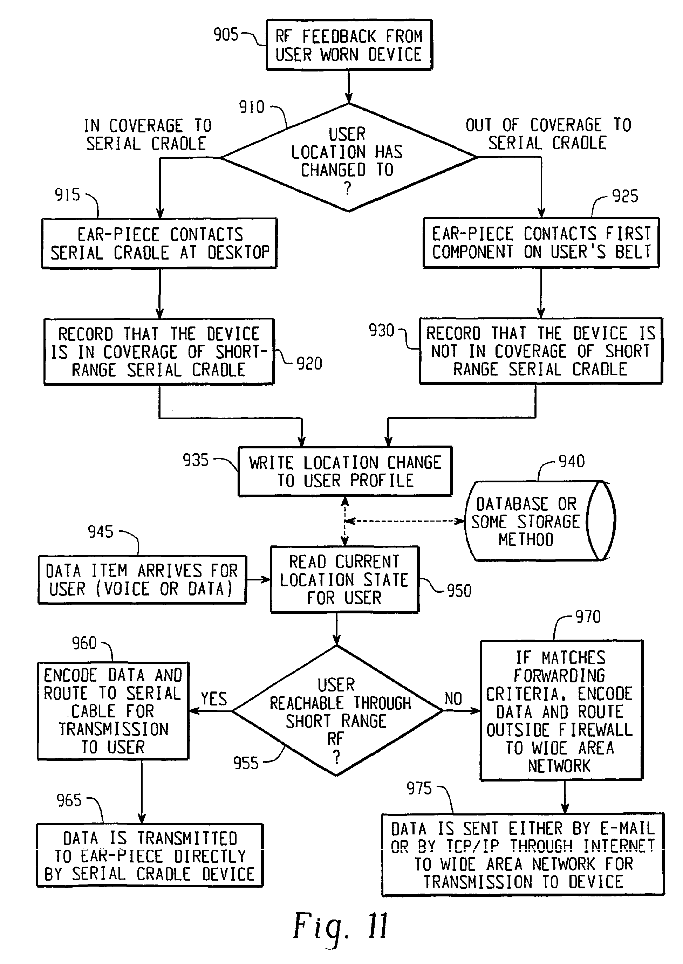

FIG. 11 is a logical flow diagram depicting a series of exemplary steps executed by a redirector application operating at a host system for determining which communication path should be used for routing data items to a particular mobile device. This flow begins either at step 905 or step 945. At step 905, RF feedback from the mobile device 100 is provided to one of the plurality of interface cradles 110. At step 945, data items such as voice calls or digital data messages arrive at the redirector application 130 for a particular mobile device user.

In step 910 the system determines whether the mobile user has changed location. This change information may be generated (1) if the user leaves RF coverage with the closest-range RF link provided by an interface cradle 110, or (2) if the user returns into short-range coverage of an interface cradle 110. If the user has entered short-range RF coverage of an interface cradle, then at step 915 the ear-piece component 305 of the mobile device 100 preferably makes contact with the closest interface cradle 110. A program operating in conjunction with the interface cradle 110 then receives the contact signal from the interface cradle 110 and records this information 920. If, alternatively, the user has just left short-range RF coverage of the interface cradle 110, then at step 925 the ear-piece component 305 will contact the belt-worn component 310 of the mobile device, and the interface cradle 110 will detect that the previously established RF link has been broken. The interface cradle 110 detects that the RF link is missing by performing a periodic PING at the protocol level to check for the presence of one or more ear-piece components 305. This contact information is then passed from the interface cradle 110 to the program operating in conjunction with the interface cradle 110 where it is temporarily stored. In either case (making contact or breaking contact), the contact information is written to a user profile at step 935 for later retrieval 940.

The user profile may be maintained at the desktop system 120 in the example system shown in FIG. 1 where the redirection application 130 is operating at a desktop host. Alternatively, the user profile may be transferred over the LAN to the network server 225 in the example shown in FIG. 2. In any event, the redirector application 130 has access to the most recently written contact information from the plurality of interface cradles 110 from which it may determine where to redirect the user's data items.

At step 945, voice and data items 95 addressed for a particular user arrive into the system. Once items are received, the redirector application queries the user database 940 (where the user profile is stored) to determine whether the user may be reached via one of the one or more pico-cells generated by the plurality of interface cradles 110. If the user is currently marked as reachable through the short-range RF network, then the data items are encoded and routed to the appropriate interface cradle 110. The encoding step ensures that security is maintained between the cradle 110 and the mobile device 100. If the user leaves coverage of the short-range RF network just at the moment that a data item is about to be transmitted to him, then the system detects this occurrence and reverts to using the long-range RF network as described in step 970. Once the data item is encoded and sent to the interface cradle 110, it is preferably received and either (1) transmitted directly to the ear-piece component 305 if it is a voice call, or (2) transmitted directly to the belt-worn component 310 if it is a data message. If the database 940 indicates that the user is not reachable by the short-range RF network, then the data item is encoded for long-range RF transmission in step 970 and is transmitted to the user's mobile device 100 over the long-range wireless network. Preferably, the encoding scheme used for long-range RF transmission is different than that used for short-range RF transmission.

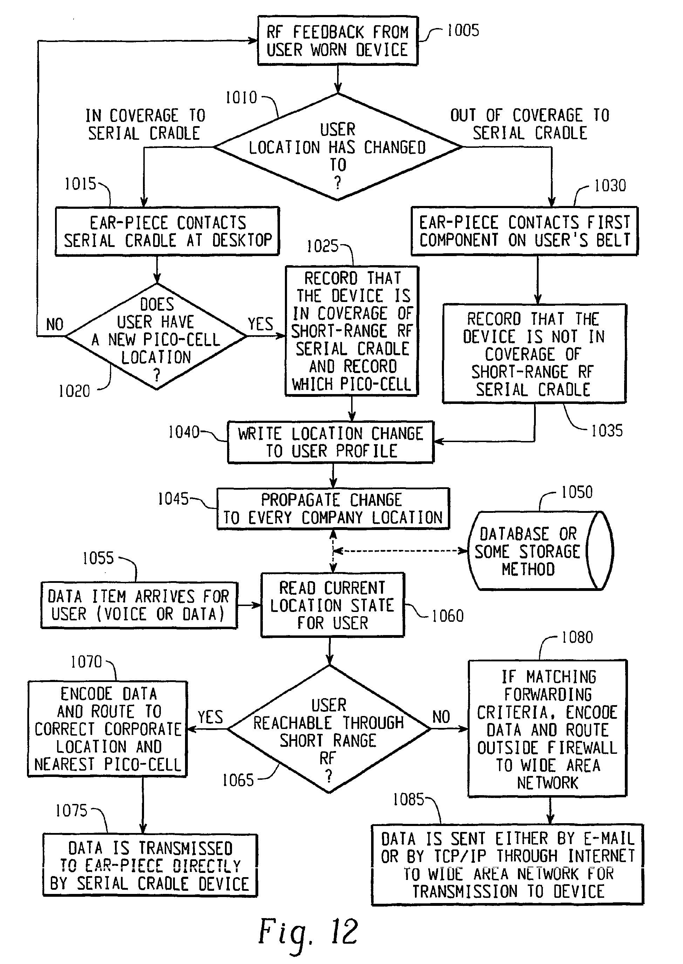

FIG. 12 is a logical flow diagram depicting a series of exemplary steps executed by a redirector application operating at a host system for determining which communication path should be used for routing data items to a particular mobile device within a corporate environment having a plurality of office locations. The steps shown in FIG. 12 are similar to those described above with respect to FIG. 11, but add support for a larger company with branch offices and many pico-cells located throughout the company's locations.

The method begins at step 1005 or 1055. At step 1005, RF feedback from the mobile device 100 is received by the system, preferably at one of the plurality of interface cradles 110. The interface cradle 110 operates in conjunction with a system program that determines, at step 1010, whether the particular mobile device 100 is making or breaking contact with the interface cradle 110. If the mobile device 100 is breaking contact with the interface cradle 110, then at step 1030 the ear-piece component 305 makes contact with the belt-worn component 310 (instead of the interface cradle 110), and at step 1035, the interface cradle 110 determines that it is no longer in communication with the ear-piece component 305 and records this lack-of-contact information.

If, however, the mobile device 100 is making contact with the interface cradle 110, then at step 1015 the ear-piece component 305 makes contact with the interface cradle 110, and at step 1020 the system determines whether the mobile device 100 is making contact with a new pico-cell (i.e., a different interface cradle 110). If the mobile device 100 is not making contact with a new interface cradle 110, then the method reverts to step 1005, and waits for additional RF feedback from the mobile device 100. If, however, the mobile device 100 is making contact with a new pico-cell cradle 110, then control passes to step 1025, where the system records contact information including information that identifies the particular pico-cell interface cradle 110.

At step 1040, the contact information from steps 1025/1035 is then provided to the redirector application 130, which stores this information in the appropriate user profile 1050. If the system includes multiple redirector applications (and perhaps multiple user profiles), then at step 1045 the contact information is propagated to the other redirector applications that may be operating at other company locations from the first redirector.

As data items are received by the redirector (or plurality of redirectors) at step 1055, the redirector reads the user profile 1050 in order to determine the approximate physical location of the user. If the user is reachable via one of the pico-cell interface cradles 110, as determined at step 1065, then control passes to step 1070 where the data items are encoded and routed to the appropriate interface cradle 110. The interface cradle 110 then transmits the data items to the mobile device 100 via the short-range communication path. If the user is not reachable via one of the pico-cell interface cradles 110, then at step 1080 the system determines if the data items are to be redirected (as configured by the user of the mobile device), and if so, then the data items are encoded and routed outside the corporate firewall to the wide-area wireless network and transmitted to the mobile device 100 in step 1085.

Having described in detail the preferred embodiments of the present invention, including the preferred methods of operation, it is to be understood that this operation could be carried out with different elements and steps. This preferred embodiment is presented only by way of example and is not meant to limit the scope of the present invention which is defined by the following claims.

## Claims

1. A method of redirecting data from a host system (120) to a mobile communication device (100) capable of communicating via a short-range wireless communication network and a long-range wireless communication network, the method comprising the steps of:
receiving data at the host system (120);
determining at the host system (120) whether the mobile communication device (100) is within coverage of a particular cell (110, 605) of a plurality of wireless cells (110, 605) forming the short-range wireless communication network, the determination being effected through a receiving at the host system (120) of information provided from the plurality of short-range wireless communication network cells to the host system ;
if the mobile communication device (100) is within coverage of a particular wireless cell, then redirecting the received data from the host system (120) to the mobile communication device (100) via a short-range wireless communication path of the particular wireless cell; and
if the mobile communication device (100) is not reachable through the short-range wireless communication network, then redirecting the received data from the host system (120) to the mobile communication device (100) via a long-range wireless communication path over a wide area network.

2. The method of claim 1, further comprising the steps of:
the mobile communication device (100) transmitting contact information to a cell (110, 605) indicating it is within coverage of that cell; and
transmitting the contact information to the host system (120) indicating that the mobile communication device (100) is within coverage of the cell.

3. The method of claim 2, further comprising the steps of:
a cell (110, 605) detecting that the mobile communication device (100) is outside of coverage of that cell and
transmitting lack of contact information to the host system (120) indicating that the mobile communication device (100) is outside of coverage of the cell.

4. The method of claim 3, further comprising the step of storing the contact information and the lack of contact information at the host system (120).

5. The method of claim 1, further comprising:
when the mobile communication device (100) is within the physical proximity of a cell (110, 605) of the plurality of cells, generating contact information;
transmitting the contact information to the host system (120); and
the host system (120) using the contact information to determine whether the mobile communication device (100) is within coverage of a cell.

6. The method of claim 5, further comprising:
when the mobile communication device (100) is not within the physical proximity of a cell (110, 605) of the plurality of cells, generating lack of contact information; transmitting the lack of contact information to the host system (120); and
the host system (120) using the lack of contact information to determine whether the mobile communication device (100) is within coverage of a cell.

7. The method of claim 1, further comprising :
placing the mobile communication device (100) in an interface cradle (110) forming a cell (110, 605) of the plurality of cells;
generating contact information indicating that the mobile communication device (100) is physically connected to said cell;
transmitting the contact information to the host system (120); and
the host system (120) using the contact information to determine whether the mobile communication device (100) is within coverage of the cell.

8. The method of claim 1, further comprising:
activating a screen saver program at the host system (120); and
if the screen saver program is activated, then determining at the host system (120) that the mobile communication device (100) is not within coverage of a cell (110, 605) of the plurality of cells.

9. The method of claim 1, further comprising:
detecting whether a user of the mobile communication device (100) is in physical proximity to a cell (110, 605) of the plurality of cells.

10. The method of claim 9, wherein the detecting step further comprises the steps of:
providing a heat sensor in physical proximity to a cell (110,605) of the plurality of cells; and
detecting the physical presence of the user of the mobile communication device (100) using the heat sensor.

11. The method of claim 9, wherein the detecting step further comprises the steps of:
providing a visual image sensor in physical proximity to a cell (110, 605) of the plurality of cells; and
detecting the physical presence of the user of the mobile communication device (100) using the visual image sensor.

12. The method of claim 1, wherein the short-range wireless network includes a plurality of Bluetooth-enabled wireless devices coupled to a network.

13. The method of claim 12, wherein the plurality of Bluetooth-enabled wireless devices are interface cradles forming cells (110, 605) capable of physically and electrically connecting to the mobile communication device (100).

14. The method of claim 1, wherein the short-range wireless network includes a plurality of RF-enabled interface cradles (110) coupled to a local area network(LAN).

15. The method of claim 14, further comprising the steps of :
as the mobile communication device (100) comes within RF coverage of one of the Rr-enabled interface cradles (110), generating contact information indicating that the mobile communication device (100) is capable of communicating with the one RF enabled interface cradle (110), the contact information including an electronic address of the one RF-enabled interface cradle (110) on the LAN; and
redirecting the received data to the one RF-enabled interface cradle (110) using the contact information.

16. The method of claim 15, further comprising the steps of :
as the mobile communication device (100) moves out of RF coverage of the one RF-enabled interface cradle (110), generating lack of contact information indicating that the mobile communication device (100) is not capable of communicating with the one RF-enabled interface cradle (110); and
redirecting the received data to the long-range wireless network until the mobile communication device (100) moves into RF coverage of the one RF-enabled interface cradle (110).

17. The method of claim 15, further comprising the steps of :
as the mobile communication device (100) moves out of RF coverage of the one RF-enabled interface cradle (110) and into RF coverage of a second RF-enabled interface cradle, generating contact information indicating that the mobile communication device (100) is capable of communicating with the second RF-enabled interface cradle, the contact information including an electronic address of the second RF-enabled interface cradle on the LAN; and
redirecting the received data to the second RF-enabled interface cradle using the contact information.

18. The method of claim 1, wherein the long-range wireless network is the Mobitex network, the GSM/GPRS network, or the CDMA network.

19. The method of claim 1, wherein the host system (120) is a desktop computer system, and the short-range wireless communication network includes at least one RF-enabled interface cradle (110) coupled to the desktop computer system (120).

20. The method of claim 1, wherein the host system (120) is a network server, and the short-range wireless communication network includes a plurality of RF-enabled interface cradles (110) coupled to the network server (120) via a local area network.

21. A system for redirecting data from a host system (120) to a mobile communication device (100) having a long-range transceiver (316) for communicating with a long-range wireless network and a short-range transceiver (318) for communicating with a short-range wireless network, the short-range wireless network comprising a plurality of wireless cells, comprising:
a redirector program (130) operating on the host system (120) for receiving data associated with a user of the mobile communication device (100) and for redirecting the received data to the mobile communication device (100); and
means associated with the redirector program (130) adapted to determine whether the mobile communication device (100) is within a coverage area of a particular wireless cell (110, 605) of a plurality of wireless cells (110, 605) forming the short-range wireless communication network, and if so, to redirect the received data to the mobile communication device (100) via a short range wireless communication path of the particular wireless cell, and if not, to redirect the received data to the mobile communication device (100) via a long-range wireless communication path over a wide area network, and
wherein the plurality of short-range wireless communication network cells are configured to provide information to the redirector program as to the roaming of the of the wireless device within the plurality of short-range wireless communication network cells, so as to allow the redirector program to alter the location to which received data should be redirected.

22. The system of claim 21, wherein the short-range wireless network includes at least one RF-enabled interface cradle (110) forming a cell for communicating with the short-range transceiver (318) of the mobile communication device (100).

23. The system of claim 22, wherein the at least one RF-enabled interface cradle (110) is coupled to the redirector program (130) via the host system (120).

24. The system of claim 23, wherein the at least one RF-enabled interface cradle (110) is coupled to the host system (120) via a local area network.

25. The system of claim 21, wherein the short range wireless network includes a plurality of RF-enabled interface cradles (110) for communicating with the short-range transceiver (318) of the mobile communication device (100).

26. The system of claim 25, wherein the plurality of RF-enabled interface cradles (110) are coupled to the redirector program (130) via a local area network.

27. The system of claim 26, wherein the redirector program (130) is operating at a network server coupled to the local area network.

28. The system of claim 27, wherein the redirector program (130) is capable of redirecting data to a plurality of mobile communication devices (100).

29. The system of claim 22, wherein the at least one RF-enabled interface cradle (110) detects whether the mobile communication device (100) is within its proximity and generates contact information which is provided to the redirector program (130).

30. The system of claim 29, wherein the contact information includes an electronic address of the at least one RF-enabled interface cradle (110).

31. The system of claim 21, wherein the short-range wireless network includes a plurality of Bluetooth-enabled interface devices (110).

32. The system of claim 22, wherein the at least one RF-enabled interface cradle (110) includes an interface for electrically and physically coupling to the mobile communication device (100).

33. The system of claim 21, wherein the mobile communication device (100) is a cellular telephone, a two-way pager, or a personal digital assistant.

34. The system of claim 21, further comprising: means for detecting short-range RF communications from the mobile communication device (100) and for generating contact information that is provided to the redirector program.

35. The system of claim 34, wherein the means for detecting includes an RF enabled interface device (110) coupled to the short-range wireless network for receiving short-range RF communications from the mobile communication device (100).

36. The system of claim 21, further comprising: a sensor for detecting the physical presence of a user of the mobile communication device (100) within the proximity of the short-range wireless network.

37. The system of claim 36, wherein the sensor is a heat sensor or a visual image sensor.

38. A redirector software application operable to redirect data from a host system (120) to a mobile communication device (100) capable of communicating via a short-range wireless communication network and a long-range wireless communication network, the redirector software application (130) operating either within a desktop system or as a part of a network server for:
processing data received at the host system (120);
communicating with a plurality of short-range wireless communication network cells of the short-range wireless network to receive information from the plurality of wireless cells as to the location of the mobile telecommunication device within a particular cell of the plurality of short-range wireless communication network cells and in response to that received information determine whether the mobile communication device (100) is within coverage of a particular cell (110, 605) of the plurality of short-range wireless communication network cells(110, 605) forming the short-range wireless communication network;
if the mobile communication device (100) is within coverage of a particular wireless cell, then redirecting the received data from the host system (120) to the mobile communication device (100) via a short-range wireless communication path of the particular wireless cell; and
if the mobile communication device (100) is not reachable through the short-range wireless communication network, then redirecting the received data from the host system (120) to the mobile communication device (100) via a long-range wireless communication path over a wide area network.

39. The redirector application of claim 38, further comprising computer executable instructions for processing receiving contact information indicating that the mobile communication device (100) is within coverage of the short-range wireless communication network.

40. The redirector application of claim 39, further comprising computer executable instructions for processing lack of contact information indicating that the mobile communication device (100) is outside of coverage of a cell of the plurality of cells.

41. The redirector application of claim 40, further comprising computer executable instructions for storing the contact information and the lack of contact information at the host system (120).

42. The redirector application of claim 41, further comprising computer executable instructions for using the contact information to determine whether the mobile communication device (100) is within coverage of a cell of the plurality of cells.

43. The redirector application of claim 41, further comprising computer executable instructions for:
using the lack of contact information to determine whether the mobiie communication device (100) is within coverage of a cell of the plurality of cells.

44. The redirector application of claim 38, further comprising computer executable instructions for:
detecting whether a screen saver program at the host system (120) is activated; and
if the screen saver program is activated, then determining at the host system (120) that the mobile communication device (100) is not within coverage of any cell.

45. The redirector application of claim 38, wherein the host system (120) is a desktop computer system.

46. The redirector application of claim 38, wherein the host system (120) is a network server.

## Patentansprüche

1. Verfahren zum Um- bzw. Weiterleiten von Daten von einem Hostsystem (120) an eine mobile Kommunikationsvorrichtung (100), die über ein drahtloses Nahbereichs-Kommunikationsnetzwerk und ein drahtloses Weitbereichs-Kommunikationsnetzwerk kommunizieren kann, wobei das Verfahren die Schritte aufweist:
Empfangen von Daten an dem Hostsystem (120);
Bestimmen an dem Hostsystem (120), ob sich die mobile Kommunikationsvorrichtung (100) in der Abdeckung einer bestimmten Zelle (110, 605) einer Vielzahl von drahtlosen Zellen (110, 605) befindet, die das drahtlose Nahbereichs-Kommunikationsnetzwerk bilden, wobei die Bestimmung durch ein Empfangen von Information an dem Hostsystem (120) bewirkt wird, die von der Vielzahl von Zellen des drahtlosen Nahbereichs-Kommunikationsnetzwerks an das Hostsystem geliefert wird;
wenn sich die mobile Kommunikationsvorrichtung (100) in der Abdeckung einer bestimmten drahtlosen Zelle befindet, dann Um- bzw. Weiterleiten der empfangenen Daten von dem Hostsystem (120) an die mobile Kommunikationsvorrichtung (100) über einen drahtlosen Nahbereichs-Kommunikationspfad der bestimmten drahtlosen Zelle; und
wenn die mobile Kommunikationsvorrichtung (100) nicht über das drahtlose Nahbereichs-Kommunikationsnetzwerk zu erreichen ist, dann Um- bzw. Weiterleiten der empfangenen Daten von dem Hostsystem (120) an die mobile Kommunikationsvorrichtung (100) über einen drahtlosen Weitbereichs-Kommunikationspfad über ein Weitbereichsnetzwerk.

2. Verfahren gemäß Anspruch 1, das weiter die Schritte aufweist:
Übertragen von Kontaktinformation durch die mobile Kommunikationsvorrichtung (100) an eine Zelle (110, 605), die anzeigt, dass sie sich in der Abdeckung dieser Zelle befindet; und
Übertragen der Kontaktinformation an das Hostsystem (120), die anzeigt, dass sich die mobile Kommunikationsvorrichtung (100) in der Abdeckung der Zelle befindet.

3. Verfahren gemäß Anspruch 2, das weiter die Schritte aufweist:
Erfassen durch eine Zelle (110, 605), dass sich die mobile Kommunikationsvorrichtung (100) außerhalb einer Abdeckung dieser Zelle befindet; und
Übertragen einer Kein-Kontakt-Information an das Hostsystem (120), die anzeigt, dass sich die mobile Kommunikationsvorrichtung (100) außerhalb einer Abdeckung der Zelle befindet.

4. Verfahren gemäß Anspruch 3, das weiter den Schritt aufweist:
Speichern der Kontaktinformation und der Kein-Kontakt-Information an dem Hostsystem (120).

5. Verfahren gemäß Anspruch 1, das weiter aufweist:
wenn sich die mobile Kommunikationsvorrichtung (100) in der physikalischen Nähe einer Zelle (110, 605) der Vielzahl von Zellen befindet, Erzeugen von Kontaktinformation;
Übertragen der Kontaktinformation an das Hostsystem (120); und
Verwenden der Kontaktinformation durch das Hostsystem (120), um zu bestimmen, ob sich die mobile Kommunikationsvorrichtung (100) in der Abdeckung einer Zelle befindet.

6. Verfahren gemäß Anspruch 5, das weiter aufweist:
wenn sich die mobile Kommunikationsvorrichtung (100) nicht in der physikalischen Nähe einer Zelle (110, 605) der Vielzahl von Zellen befindet, Erzeugen einer Kein-Kontakt-Information; Übertragen der Kein-Kontakt-Information an das Hostsystem (120); und Verwenden der Kein-Kontakt-Information durch das Hostsystem (120), um zu bestimmen, ob sich die mobile Kommunikationsvorrichtung (100) in der Abdeckung einer Zelle befindet.

7. Verfahren gemäß Anspruch 1, das weiter aufweist:
Platzieren der mobilen Kommunikationsvorrichtung (100) in einer Schnittstellen-Aufnahmevorrichtung (110), die eine Zelle (110, 605) der Vielzahl von Zellen bildet;
Erzeugen von Kontaktinformation, die anzeigt, dass sich die mobile Kommunikationsvorrichtung (100) physikalisch mit der Zelle verbunden ist; Übertragen der Kontaktinformation an das Hostsystem (120); und
Verwenden der Kontaktinformation durch das Hostsystem (120), um zu bestimmen, ob sich die mobile Kommunikationsvorrichtung (100) in der Abdeckung der Zelle befindet.

8. Verfahren gemäß Anspruch 1, das weiter aufweist:
Aktivieren eines Bildschirmschoner-Programms an dem Hostsystem (120); und
wenn das Bildschirmschoner-Programm aktiviert ist, dann Bestimmen an dem Hostsystem (120), dass sich die mobile Kommunikationsvorrichtung (100) nicht in einer Abdeckung einer Zelle (110, 605) der Vielzahl von Zellen befindet.

9. Verfahren gemäß Anspruch 1, das weiter aufweist:
Erfassen, ob sich ein Benutzer der mobilen Kommunikationsvorrichtung (100) in einer physikalischen Nähe zu einer Zelle (110, 605) der Vielzahl von Zellen befindet.

10. Verfahren gemäß Anspruch 9, wobei der Erfassungsschritt weiter die Schritte aufweist:
Vorsehen eines Wärmesensors in physikalischer Nähe einer Zelle (110, 605) der Vielzahl von Zellen; und
Erfassen einer physikalischen Präsenz des Benutzers der mobile Kommunikationsvorrichtung (100) unter Verwendung des Wärmesensors.

11. Verfahren gemäß Anspruch 9, wobei der Erfassungsschritt weiter die Schritte aufweist:
Vorsehen eines visuellen Bild-Sensors in physikalischer Nähe einer Zelle (110, 605) der Vielzahl von Zellen; und
Erfassen einer physikalischen Präsenz des Benutzers der mobile Kommunikationsvorrichtung (100) unter Verwendung des visuellen Bild-Sensors.

12. Verfahren gemäß Anspruch 1, wobei das drahtlose Nahbereichs-Netzwerk eine Vielzahl von Bluetooth-tauglichen drahtlosen Vorrichtungen umfasst, die mit einem Netzwerk verbunden sind.

13. Verfahren gemäß Anspruch 12, wobei die Vielzahl von Bluetooth-tauglichen drahtlosen Vorrichtungen Schnittstellen-Aufnahmevorrichtungen sind, die Zellen (110, 605) bilden, die physikalisch und elektrisch mit der mobilen Kommunikationsvorrichtung (100) verbunden werden können.

14. Verfahren gemäß Anspruch 1, wobei das drahtlose Nahbereichs-Netzwerk eine Vielzahl von RF-tauglichen Schnittstellen-Aufnahmevorrichtungen (110) umfasst, die mit einem lokalen Netzwerk (LAN - local area network) verbunden sind.

15. Verfahren gemäß Anspruch 14, das weiter die Schritte aufweist:
wenn die mobile Kommunikationsvorrichtung (100) in eine RF-Abdeckung von einer der RF-tauglichen Schnittstellen-Aufnahmevorrichtungen (110) kommt, Erzeugen von Kontaktinformation, die anzeigt, dass die mobile Kommunikationsvorrichtung (100) mit der einen RF-tauglichen Schnittstellen-Aufnahmevorrichtung (110) kommunizieren kann, wobei die Kontaktinformation eine elektronische Adresse der einen RF-tauglichen Schnittstellen-Aufnahmevorrichtung (110) auf dem LAN umfasst; und
Um- bzw. Weiterleiten der empfangenen Daten an die eine RF-taugliche Schnittstellen-Aufnahmevorrichtung (110) unter Verwendung der Kontaktinformation.

16. Verfahren gemäß Anspruch 15, das weiter die Schritte aufweist:
wenn sich die mobile Kommunikationsvorrichtung (100) aus der RF-Abdeckung der einen RF-tauglichen Schnittstellen-Aufnahmevorrichtung (110) heraus bewegt, Erzeugen einer Kein-Kontakt-Information, die anzeigt, dass die mobile Kommunikationsvorrichtung (100) nicht mit der einen RF-tauglichen Schnittstellen-Aufnahmevorrichtung (110) kommunizieren kann; und
Um- bzw. Weiterleiten der empfangenen Daten an das drahtlose Weitbereichsnetzwerk, bis sich die mobile Kommunikationsvorrichtung (100) in die RF-Abdeckung der einen RF-tauglichen Schnittstellen-Aufnahmevorrichtung (110) bewegt.

17. Verfahren gemäß Anspruch 15, das weiter die Schritte aufweist:
wenn sich die mobile Kommunikationsvorrichtung (100) aus der RF-Abdeckung der einen RF-tauglichen Schnittstellen-Aufnahmevorrichtung (110) heraus bewegt und in eine RF-Abdeckung einer zweiten RF-tauglichen Schnittstellen-Aufnahmevorrichtung bewegt, Erzeugen von Kontaktinformation, die anzeigt, dass die mobile Kommunikationsvorrichtung (100) mit der zweiten RF-tauglichen Schnittstellen-Aufnahmevorrichtung kommunizieren kann, wobei die Kontaktinformation eine elektronische Adresse der zweiten RF-tauglichen Schnittstellen-Aufnahmevorrichtung auf dem LAN umfasst; und
Um- bzw. Weiterleiten der empfangenen Daten an die zweite RF-taugliche Schnittstellen-Aufnahmevorrichtung unter Verwendung der Kontaktinformation.

18. Verfahren gemäß Anspruch 1, wobei das drahtlose Weitbereichsnetzwerk das Mobitex-Netzwerk, das GSM/GPRS-Netzwerk oder das CDMA-Netzwerk ist.

19. Verfahren gemäß Anspruch 1, wobei das Hostsystem (120) ein Desktopcomputer-System ist, und das drahtlose Nahbereichs-Kommunikationsnetzwerk zumindest eine RF-taugliche Schnittstellen-Aufnahmevorrichtung (110) umfasst, die mit dem Desktopcomputer-System verbunden ist.

20. Verfahren gemäß Anspruch 1, wobei das Hostsystem (120) ein Netzwerk-Server ist, und das drahtlose Nahbereichs-Kommunikationsnetzwerk eine Vielzahl von RF-tauglichen Schnittstellen-Aufnahmevorrichtungen (110) umfasst, die mit dem Netzwerk-Server (120) über ein lokales Netzwerk verbunden sind.

21. System zum Um- bzw. Weiterleiten von Daten von einem Hostsystem (120) an eine mobile Kommunikationsvorrichtung (100), die einen Weitbereichs-Transceiver (316) umfasst zum Kommunizieren mit einem drahtlosen Weitbereichsnetzwerk und einen Nahbereichs-Transceiver (318) umfasst zum Kommunizieren mit einem drahtlosen Nahbereichsnetzwerk, wobei das drahtlose Nahbereichsnetzwerk eine Vielzahl von drahtlosen Zellen aufweist, wobei das System aufweist:
ein Redirector-Programm (130), das auf dem Hostsystem (120) arbeitet, zum Empfangen von Daten, die zu einem Benutzer der mobilen Kommunikationsvorrichtung (100) gehören, und zum Um- bzw. Weiterleiten der empfangenen Daten an die mobilen Kommunikationsvorrichtung (100); und
Mittel, die zu dem Redirector-Programm (130) gehören, die ausgebildet sind, zu bestimmen, ob sich die mobile Kommunikationsvorrichtung (100) in einem Abdeckungsbereich einer bestimmten drahtlosen Zelle (110, 605) einer Vielzahl von drahtlosen Zellen (110, 605) befindet, die das drahtlose Nahbereichs-Kommunikationsnetzwerk bilden, und wenn dem so ist, die empfangenen Daten an die mobile Kommunikationsvorrichtung (100) über einen drahtlosen Nahbereichs-Kommunikationspfad der bestimmten drahtlosen Zelle um- bzw. weiterzuleiten, und wenn nicht, die empfangenen Daten an die mobile Kommunikationsvorrichtung (100) über einen drahtlosen Weitbereichs-Kommunikationspfad über ein Weitbereichsnetzwerk um- bzw. weiterzuleiten, und
wobei die Vielzahl von drahtlosen Nahbereichs-Kommunikationsnetzwerkzellen konfiguriert sind, eine Information an das Redirector-Programm zu liefern hinsichtlich des Roamings der drahtlosen Vorrichtung in der Vielzahl von drahtlosen Nahbereichs-Kommunikationsnetzwerkzellen, um **dadurch** dem Redirector-Programm zu ermöglichen, den Ort zu ändern, an den empfangene Daten um- bzw. weitergeleitet werden sollen.

22. System gemäß Anspruch 21, wobei das drahtlose Nahbereichs-Netzwerk zumindest eine RF-taugliche Schnittstellen-Aufnahmevorrichtung (110) umfasst, die eine Zelle bildet, zum Kommunizieren mit dem Nahbereichs-Transceiver (318) der mobilen Kommunikationsvorrichtung (100).

23. System gemäß Anspruch 22, wobei die zumindest eine RF-taugliche Schnittstellen-Aufnahmevorrichtung (110) mit dem Redirector-Programm (130) über das Hostsystem (120) verbunden ist.

24. System gemäß Anspruch 23, wobei die zumindest eine RF-taugliche Schnittstellen-Aufnahmevorrichtung (110) mit dem Hostsystem (120) über ein lokales Netzwerk verbunden ist.

25. System gemäß Anspruch 21, wobei das drahtlose Nahbereichs-Netzwerk eine Vielzahl von RF-tauglichen Schnittstellen-Aufnahmevorrichtungen (110) umfasst zum Kommunizieren mit dem Nahbereichs-Transceiver (318) der mobilen Kommunikationsvorrichtung (100).

26. System gemäß Anspruch 25, wobei die Vielzahl von RF-tauglichen Schnittstellen-Aufnahmevorrichtungen (110) mit dem Redirector-Programm (130) über ein lokales Netzwerk verbunden sind.

27. System gemäß Anspruch 26, wobei das Redirector-Programm (130) an einem Netzwerk-Server arbeitet, der mit dem lokalen Netzwerk verbunden ist.

28. System gemäß Anspruch 27, wobei das Redirector-Programm (130) Daten an eine Vielzahl von mobilen Kommunikationsvorrichtungen (100) um- bzw. weiterleiten kann.

29. System gemäß Anspruch 22, wobei die zumindest eine RF-taugliche Schnittstellen-Aufnahmevorrichtung (110) erfasst, ob die mobile Kommunikationsvorrichtung (100) in ihrer Nähe ist, und Kontaktinformation erzeugt, die an das Redirector-Programm (130) geliefert wird.

30. System gemäß Anspruch 29, wobei die Kontaktinformation eine elektronische Adresse der zumindest einen RF-tauglichen Schnittstellen-Aufnahmevorrichtung (110) umfasst.

31. System gemäß Anspruch 21, wobei das drahtlose Nahbereichs-Netzwerk eine Vielzahl von Bluetooth-tauglichen Schnittstellenvorrichtungen (110) umfasst.

32. System gemäß Anspruch 22, wobei die zumindest eine RF-taugliche Schnittstellen-Aufnahmevorrichtung (110) eine Schnittstelle umfasst zur elektrischen und physikalischen Verbindung mit der mobilen Kommunikationsvorrichtung (100).

33. System gemäß Anspruch 21, wobei die mobile Kommunikationsvorrichtung (100) ein zellulares Telefon, ein Zweiweg-Pager oder ein persönlicher digitaler Assistent ist.

34. System gemäß Anspruch 21, das weiter aufweist: Mittel zum Erfassen von Nahbereichs-RF-Kommunikationen von der mobilen Kommunikationsvorrichtung (100) und zum Erzeugen von Kontaktinformation, die an das Redirector-Programm geliefert wird.

35. System gemäß Anspruch 34, wobei das Mittel zum Erfassen eine RF-taugliche Schnittstellenvorrichtung (110) umfasst, die mit dem drahtlosen Nahbereichs-Netzwerk verbunden ist, zum Empfangen von Nahbereichs-RF-Kommunikationen von der mobilen Kommunikationsvorrichtung (100).

36. System gemäß Anspruch 21, das weiter aufweist: einen Sensor zum Erfassen der physikalischen Präsenz eines Benutzers der mobilen Kommunikationsvorrichtung (100) innerhalb der Nähe des drahtlosen Nahbereichs-Netzwerks.

37. System gemäß Anspruch 36, wobei der Sensor ein Wärmesensor oder ein visueller Bild-Sensor ist.

38. Redirector-Software-Anwendung, die betriebsfähig ist, Daten von einem Hostsystem (120) an eine mobile Kommunikationsvorrichtung (100) um- bzw. weiterzuleiten, die über ein drahtloses Nahbereichs-Kommunikationsnetzwerk und ein drahtloses Weitbereichs-Kommunikationsnetzwerk kommunizieren kann, wobei die Redirector-Software-Anwendung (130) entweder in einem Desktopsystem oder als Teil eines Netzwerk-Servers arbeitet, die vorgesehen ist zum:
Verarbeiten von Daten, die an dem Hostsystem (120) empfangen werden; Kommunizieren mit einer Vielzahl von drahtlosen Nahbereichs-Kommunikationsnetzwerkszellen des drahtlosen Nahbereichs-Netzwerk, um Information von der Vielzahl von drahtlosen Zellen hinsichtlich der Position der mobilen Telekommunikationsvorrichtung in einer bestimmten Zelle der Vielzahl von drahtlosen Nahbereichs-Kommunikationsnetzwerkszellen zu empfangen, und in Reaktion auf diese empfangene Information zu bestimmen, ob sich die mobile Kommunikationsvorrichtung (100) in einer Abdeckung einer bestimmten Zelle (110, 605) der Vielzahl von drahtlosen Nahbereichs-Kommunikationsnetzwerkszellen (110, 605) befindet, die das drahtlose Nahbereichs-Kommunikationsnetzwerk bilden;
wenn sich die mobile Kommunikationsvorrichtung (100) in der Abdeckung einer bestimmten drahtlosen Zelle befindet, dann Um- bzw. Weiterleiten der empfangenen Daten von dem Hostsystem (120) an die mobile Kommunikationsvorrichtung (100) über einen drahtlosen Nahbereichs-Kommunikationspfad der bestimmten drahtlosen Zelle; und
wenn die mobile Kommunikationsvorrichtung (100) nicht über das drahtlose Nahbereichs-Kommunikationsnetzwerk zu erreichen ist, dann Um- bzw. Weiterleiten der empfangenen Daten von dem Hostsystem (120) an die mobile Kommunikationsvorrichtung (100) über einen drahtlosen Weitbereichs-Kommunikationspfad über ein Weitbereichsnetzwerk.

39. Redirector-Anwendung gemäß Anspruch 38, die weiter Computerausführbare Anweisungen aufweist zur Verarbeitung empfangener Kontaktinformation, die anzeigt, dass sich die mobile Kommunikationsvorrichtung (100) in der Abdeckung des drahtlosen Nahbereichs-Kommunikationsnetzwerks befindet.

40. Redirector-Anwendung gemäß Anspruch 39, die weiter Computerausführbare Anweisungen aufweist zur Verarbeitung einer Kein-Kontakt-Information, die anzeigt, dass sich die mobile Kommunikationsvorrichtung (100) außerhalb der Abdeckung einer Zelle der Vielzahl von Zellen befindet.

41. Redirector-Anwendung gemäß Anspruch 40, die weiter Computerausführbare Anweisungen aufweist zum Speichern der Kontaktinformation und der Kein-Kontakt-Information an dem Hostsystem (120).

42. Redirector-Anwendung gemäß Anspruch 41, die weiter Computerausführbare Anweisungen aufweist zur Verwendung der Kontaktinformation, um zu bestimmen, ob sich die mobile Kommunikationsvorrichtung (100) in der Abdeckung einer Zelle der Vielzahl von Zellen befindet.

43. Redirector-Anwendung gemäß Anspruch 41, die weiter Computerausführbare Anweisungen aufweist zur:
Verwendung der Kein-Kontakt-Information, um zu bestimmen, ob sich die mobile Kommunikationsvorrichtung (100) in der Abdeckung einer Zelle der Vielzahl von Zellen befindet.

44. Redirector-Anwendung gemäß Anspruch 38, die weiter Computerausführbare Anweisungen aufweist zum:
Erfassen, ob ein Bildschirmschoner-Programm an dem Hostsystem (120) aktiviert ist; und
wenn das Bildschirmschoner-Programm aktiviert ist, dann Bestimmen an dem Hostsystem (120), dass sich die mobile Kommunikationsvorrichtung (100) nicht in der Abdeckung einer Zelle befindet.

45. Redirector-Anwendung gemäß Anspruch 38, wobei das Hostsystem (120) ein Desktopcomputersystem ist.

46. Redirector-Anwendung gemäß Anspruch 38, wobei das Hostsystem (120) ein Netzwerk-Server ist.

## Revendications

1. Procédé de redirection de données entre un système hôte (120) et un dispositif de communication mobile (100) capable de communiquer via un réseau de communication sans fil à courte portée et un réseau de communication sans fil à longue portée, le procédé comprenant les étapes consistant à :
recevoir des données sur le système hôte (120) ;
déterminer sur le système hôte (120) si le dispositif de communication mobile (100) se situe dans la zone de couverture d'une cellule particulière (110, 605) parmi une pluralité de cellules sans fil (110, 605) formant le réseau de communication sans fil à courte portée, la détermination étant réalisée par une réception, sur le système hôte (120), d'informations fournies au système hôte par la pluralité de cellules du réseau de communication sans fil à courte portée ;
si le dispositif de communication mobile (100) se situe dans la zone de couverture d'une cellule sans fil particulière, rediriger les données reçues entre le système hôte (120) et le dispositif de communication mobile (100) via un trajet de communication sans fil à courte portée de la cellule sans fil particulière ; et
si le dispositif de communication mobile (100) n'est pas joignable par le réseau de communication sans fil à courte portée, rediriger les données reçues entre le système hôte (120) et le dispositif de communication mobile (100) via un trajet de communication sans fil à longue portée sur un réseau étendu.

2. Procédé selon la revendication 1, comprenant en outre les étapes consistant à :
émettre par le dispositif de communication mobile (100) des informations de contact vers une cellule (110, 605) afin d'indiquer qu'il se situe dans la zone de couverture de cette cellule ; et
émettre les informations de contact vers le système hôte (120) pour indiquer que le dispositif de communication mobile (100) se situe dans la zone de couverture de la cellule.

3. Procédé selon la revendication 2, comprenant en outre les étapes consistant à :
détecter par une cellule (110, 605) que le dispositif de communication mobile (100) se situe en dehors de la zone de couverture de cette cellule ; et
émettre des informations d'absence de contact vers le système hôte (120), pour indiquer que le dispositif de communication mobile (100) se situe en dehors de la zone de couverture de la cellule.

4. Procédé selon la revendication 3, comprenant en outre l'étape consistant à stocker les informations de contact et les informations d'absence de contact sur le système hôte (120).

5. Procédé selon la revendication 1, comprenant en outre les étapes consistant à :
lorsque le dispositif de communication mobile (100) se situe à proximité physique d'une cellule (110, 605) parmi la pluralité de cellules, produire des informations de contact ;
émettre les informations de contact vers le système hôte (120) ; et
utiliser les informations de contact par le système hôte (120) pour déterminer si le dispositif de communication mobile (100) se situe dans la zone de couverture d'une cellule.

6. Procédé selon la revendication 5, comprenant en outre les étapes consistant à :
lorsque le dispositif de communication mobile (100) ne se situe à proximité physique d'une cellule (110, 605) parmi la pluralité de cellules, produire des informations d'absence de contact ;
émettre les informations d'absence de contact vers le système hôte (120) ; et
utiliser les informations d'absence de contact par le système hôte (120) pour déterminer si le dispositif de communication mobile (100) se situe dans la zone de couverture d'une cellule.

7. Procédé selon la revendication 1, comprenant en outre les étapes consistant à :
placer le dispositif de communication mobile (100) dans un berceau d'interface (110) formant une cellule (110, 605) parmi la pluralité de cellules ;
produire des informations de contact indiquant que le dispositif de communication mobile (100) est connecté physiquement à ladite cellule ;
émettre les informations de contact vers le système hôte (120) ; et
utiliser les informations de contact par le système hôte (120) pour déterminer si le dispositif de communication mobile (100) se situe dans la zone de couverture de la cellule.

8. Procédé selon la revendication 1, comprenant en outre les étapes consistant à :
activer un programme économiseur d'écran sur le système hôte (120) ; et
si le programme économiseur d'écran est activé, déterminer sur le système hôte (120) que le dispositif de communication mobile (100) ne se situe pas dans la zone de couverture d'une cellule (110, 605) parmi la pluralité de cellules.

9. Procédé selon la revendication 1, comprenant en outre l'étape consistant à :
détecter si un utilisateur du dispositif de communication mobile (100) se situe à proximité physique d'une cellule (110, 605) parmi la pluralité de cellules.

10. Procédé selon la revendication 9, dans lequel l'étape de détection comprend en outre les étapes consistant à :
fournir un capteur thermique à proximité physique de la cellule (110, 605) parmi la pluralité de cellules ; et
détecter la présence physique de l'utilisateur du dispositif de communication mobile (100) à l'aide du capteur thermique.

11. Procédé selon la revendication 9, dans lequel l'étape de détection comprend en outre les étapes consistant à :
fournir un capteur d'images visuelles à proximité physique de la cellule (110, 605) parmi la pluralité de cellules ; et
détecter la présence physique de l'utilisateur du dispositif de communication mobile (100) à l'aide du capteur d'images visuelles.

12. Procédé selon la revendication 1, dans lequel le réseau sans fil à courte portée comprend une pluralité de dispositifs sans fil à fonctions Bluetooth qui sont couplés à un réseau.

13. Procédé selon la revendication 12, dans lequel la pluralité de dispositifs sans fil à fonctions Bluetooth est constituée de berceaux d'interface formant des cellules (110, 605), capables de se connecter physiquement et électriquement avec le dispositif de communication mobile (100).

14. Procédé selon la revendication 1, dans lequel le réseau sans fil à courte portée comprend une pluralité de berceaux d'interface à fonctionnalités RF (110) qui sont couplés à un réseau local.

15. Procédé selon la revendication 14, comprenant en outre les étapes consistant à :
lorsque le dispositif de communication mobile (100) arrive dans la zone de couverture RF d'un des berceaux d'interface à fonctionnalités RF (110), produire des informations de contact indiquant que le dispositif de communication mobile (100) est en mesure de communiquer avec ledit un berceau d'interface à fonctionnalités RF (110), les informations de contact comprenant une adresse électronique dudit un berceau d'interface à fonctionnalités RF (110) sur le réseau ; et
rediriger les données reçues vers ledit un berceau d'interface à fonctionnalités RF (110) à l'aide des informations de contact.

16. Procédé selon la revendication 15, comprenant en outre les étapes consistant à :
lorsque le dispositif de communication mobile (100) quitte la zone de couverture RF dudit un berceau d'interface à fonctionnalités RF (110), produire des informations d'absence de contact indiquant que le dispositif de communication mobile (100) n'est pas en mesure de communiquer avec ledit un berceau d'interface à fonctionnalités RF (110) ; et
rediriger les données reçues vers le réseau sans fil à longue portée jusqu'à ce que le dispositif de communication mobile (100) revienne dans la zone de couverture RF dudit un berceau d'interface à fonctionnalités RF (110).

17. Procédé selon la revendication 15, comprenant en outre les étapes consistant à :
lorsque le dispositif de communication mobile (100) quitte la zone de couverture RF dudit un berceau d'interface à fonctionnalités RF (110) et entre dans la zone de couverture RF d'un second berceau d'interface à fonctionnalités RF, produire des informations de contact indiquant que le dispositif de communication mobile (100) est en mesure de communiquer avec le second berceau d'interface à fonctionnalités RF, les informations de contact (110) comprenant une adresse électronique du second berceau d'interface à fonctionnalités RF sur le réseau local ; et
rediriger les données reçues vers le second berceau d'interface à fonctionnalités RF à l'aide des informations de contact.

18. Procédé selon la revendication 1, dans lequel le réseau sans fil à longue portée est le réseau Mobitex, le réseau GSM/GPRS ou le réseau AMRC.

19. Procédé selon la revendication 1, dans lequel le système hôte (120) est un système informatique de bureau et le réseau de communication sans fil à courte portée comprend au moins un berceau d'interface à fonctionnalités RF (110) couplé au système informatique de bureau (120).

20. Procédé selon la revendication 1, dans lequel le système hôte (120) est un serveur de réseau et le réseau de communication sans fil à courte portée comprend une pluralité de berceaux d'interface à fonctionnalités RF (110) couplés au serveur de réseau (120) via un réseau local.

21. Système destiné à rediriger des données entre un système hôte (120) et un dispositif de communication mobile (100) possédant un émetteur-récepteur à longue portée (316) pour communiquer avec un réseau sans fil à longue portée et un émetteur-récepteur à courte portée (318) pour communiquer avec un réseau sans fil à courte portée, le réseau sans fil à courte portée comprenant une pluralité de cellules sans fil, comprenant :
un programme de redirection (130) fonctionnant sur le système hôte (120), destiné à recevoir des données associées à un utilisateur du dispositif de communication mobile (100) et à rediriger les données reçues vers le dispositif de communication mobile (100) ; et
un moyen associé au programme de redirection (130), conçu pour déterminer si le dispositif de communication mobile (100) se situe dans la zone de couverture d'une cellule particulière (110, 605) parmi une pluralité de cellules sans fil (110, 605) formant le réseau de communication sans fil à courte portée, et, si tel est le cas, pour rediriger les données reçues vers le dispositif de communication mobile (100) via un trajet de communication sans fil à courte portée de la cellule sans fil particulière et, si tel n'est pas le cas, pour rediriger les données reçues vers le dispositif de communication mobile (100) via un trajet de communication sans fil à longue portée sur un réseau étendu ; et
dans lequel la pluralité de cellules du réseau de communication sans fil à courte portée est configurée pour fournir au programme de redirection des informations sur l'itinérance du dispositif sans fil dans la pluralité de cellules du réseau de communication sans fil à courte portée, afin de permettre au programme de redirection de modifier l'endroit vers lequel les données reçues doivent être redirigées.

22. Système selon la revendication 21, dans lequel le réseau sans fil à courte portée comprend au moins un berceau d'interface à fonctionnalités RF (110) formant une cellule afin de communiquer avec l'émetteur-récepteur à courte portée (318) du dispositif de communication mobile (100).

23. Système selon la revendication 22, dans lequel ledit au moins un berceau d'interface à fonctionnalités RF (110) est couplé au programme de redirection (130) via le système hôte (120).

24. Système selon la revendication 23, dans lequel ledit au moins un berceau d'interface à fonctionnalités RF (110) est couplé au système hôte (120) via un réseau local.

25. Système selon la revendication 21, dans lequel le réseau sans fil à courte portée comprend une pluralité de berceaux d'interface à fonctionnalités RF (110) afin de communiquer avec l'émetteur-récepteur à courte portée (318) du dispositif de communication mobile (100).

26. Système selon la revendication 25, dans lequel la pluralité de berceaux d'interface à fonctionnalités RF (110) est couplée au programme de redirection (130) via un réseau local.

27. Système selon la revendication 26, dans lequel le programme de redirection (130) fonctionne sur un serveur de réseau couplé au réseau local.

28. Système selon la revendication 27, dans lequel le programme de redirection (130) est en mesure de rediriger des données vers une pluralité de dispositifs de communication mobiles (100).

29. Système selon la revendication 22, dans lequel ledit au moins un berceau d'interface à fonctionnalités RF (110) détecte si le dispositif de communication mobile (100) est à proximité et produit des informations de contact qui sont fournies au programme de redirection (130).

30. Système selon la revendication 29, dans lequel les informations de contact incluent une adresse électronique dudit au moins un berceau d'interface à fonctionnalités RF (110).

31. Système selon la revendication 21, dans lequel le réseau sans fil à courte portée comprend une pluralité de dispositifs d'interface à fonctionnalités Bluetooth (110).

32. Système selon la revendication 22, dans lequel ledit au moins un berceau d'interface à fonctionnalités RF (110) comprend une interface pour le couplage électrique et physique avec le dispositif de communication mobile (100).

33. Système selon la revendication 21, dans lequel le dispositif de communication mobile (100) est un téléphone cellulaire, un boîtier de recherche bidirectionnel ou un assistant numérique personnel.

34. Système selon la revendication 21, comprenant en outre un moyen destiné à détecter des communications RF à courte portée provenant du dispositif de communication mobile (100) et à produire des informations de contact qui sont fournies au programme de redirection.

35. Système selon la revendication 34, dans lequel le moyen de détection comprend un dispositif d'interface à fonctionnalités RF (110) couplé au réseau sans fil à courte portée afin de recevoir des communications RF à courte portée provenant du dispositif de communication mobile (100).

36. Système selon la revendication 21, comprenant en outre : un capteur destiné à détecter la présence physique d'un utilisateur du dispositif de communication mobile (100) à proximité du réseau sans fil à courte portée.

37. Système selon la revendication 36, dans lequel le capteur est un capteur thermique ou un capteur d'images visuelles.

38. Application logicielle de redirection en mesure de rediriger des données entre un système hôte (120) et un dispositif de communication mobile (100) capable de communiquer via un réseau de communication sans fil à courte portée et un réseau de communication sans fil à longue portée, l'application logicielle de redirection (130) fonctionnant soit au sein d'un système de bureau soit au sein d'un serveur de réseau et étant destinée à :
traiter des données reçues sur le système hôte (120) ;
communiquer avec une pluralité de cellules de communication sans fil à courte portée du réseau sans fil à courte portée afin de recevoir des informations de la pluralité de cellules sans fil sur la position du dispositif de communication mobile dans une cellule particulière parmi la pluralité de cellules de communication sans fil à courte portée et, en fonction des informations reçues, déterminer si le dispositif de communication mobile (100) se situe dans la zone de couverture d'une cellule particulière (100, 605) parmi la pluralité de cellules de communication sans fil à courte portée (110, 605) formant le réseau de communication sans fil à courte portée ;
si le dispositif de communication mobile (100) se situe dans la zone de couverture d'une cellule sans fil particulière, rediriger les données reçues entre le système hôte (120) et le dispositif de communication mobile (100), via un trajet de communication sans fil à courte portée de la cellule sans fil particulière ; et
si le dispositif de communication mobile (100) n'est pas joignable par le réseau de communication sans fil à courte portée, rediriger les données reçues entre le système hôte (120) et le dispositif de communication mobile (100) via un trajet de communication sans fil à longue portée sur un réseau étendu.

39. Application logicielle de redirection selon la revendication 38, comprenant en outre des instructions exécutables par ordinateur destinées à traiter des informations de contact reçues qui indiquent que le dispositif de communication mobile (100) se situe dans la zone de couverture du réseau de communication sans fil à courte portée.

40. Application logicielle de redirection selon la revendication 39, comprenant en outre des instructions exécutables par ordinateur destinées à traiter des informations d'absence de contact indiquant que le dispositif de communication mobile (100) se situe en dehors de la zone de couverture d'une cellule parmi la pluralité de cellules.

41. Application logicielle de redirection selon la revendication 40, comprenant en outre des instructions exécutables par ordinateur destinées à stocker les informations de contact et les informations d'absence de contact sur le système hôte (120).

42. Application logicielle de redirection selon la revendication 41, comprenant en outre des instructions exécutables par ordinateur destinées à utiliser les informations de contact pour déterminer si le dispositif de communication mobile (100) se situe dans la zone de couverture d'une cellule parmi la pluralité de cellules.

43. Application logicielle de redirection selon la revendication 41, comprenant en outre des instructions exécutables par ordinateur destinées à :
utiliser les informations d'absence de contact pour déterminer si le dispositif de communication mobile (100) est situé dans la zone de couverture d'une cellule parmi la pluralité de cellules.

44. Application logicielle de redirection selon la revendication 38, comprenant en outre des instructions exécutables par ordinateur destinées à :
détecter si un programme économiseur d'écran a été activé sur le système hôte (120) ; et
si le programme économiseur d'écran est activé, déterminer sur le système hôte (120) que le dispositif de communication mobile (100) ne se situe pas dans la zone de couverture de l'une quelconque des cellules.

45. Application logicielle de redirection selon la revendication 38, dans laquelle le système hôte (120) est un système informatique de bureau.

46. Application logicielle de redirection selon la revendication 38, dans laquelle le système hôte (120) est un serveur de réseau.
